# EUROPÄISCHE PATENTSCHRIFT

(11) **EP 0 999 240 B1**
(45) Veröffentlichungstag und Bekanntmachung des Hinweises auf die Patenterteilung: **27.08.2003**
(21) Anmeldenummer: 99121806.6
(22) Anmeldetag: 04.11.1999
(51) Int. Cl.: C09B 67/22

(54) **Farbstoffmischungen von wasserlöslichen faserreaktiven Azofarbstoffen und ihre Verwendung**
Mixtures of water soluble reactive azo dyes and their use
Mélanges de colorants azoiques réactifs aquasolubles et leur utilisation

(30) Priorität: 07.11.1998 DE 19851389
(43) Veröffentlichungstag der Anmeldung: 10.05.2000
(73) Patentinhaber: DyStar Textilfarben GmbH & Co. Deutschland KG, 65926 Frankfurt am Main (DE)
(72) Erfinder: Schumacher, Christian, Dr., 65779 Kelkheim (DE); Eden, Birgit, 65929 Frankfurt am Main (DE)

(56) Entgegenhaltungen:
- EP-A- 0 668 328
- DE-A- 3 801 112
- DE-C- 4 139 954
- PATENT ABSTRACTS OF JAPAN vol. 013, no. 442 (C-641), 3. Oktober 1989 (1989-10-03) & JP 01 170661 A (MITSUBISHI KASEI CORP), 5. Juli 1989 (1989-07-05)
- K.FRITSCHE, JSDC Vol.108, 225 (1992)

## Beschreibung

Die Erfindung liegt auf dem technischen Gebiet der faserreaktiven Azofarbstoffe.

Aus der japanischen Patentanmeldungs-Veröffentlichung Hei-1-170 661 sind Mischungen von gelbfärbenden Monoazofarbstoffen mit einer faserreaktiven Gruppe der Vinylsulfonreihe bekannt, aus der deutschen Patentschrift DE 41 39 954 sind Mischungen von Reaktivfarbstoffen enthaltend einen Dichlorchinoxalinrest und Reaktivfarbstoffen enthaltend einen Chlortriazinylrest bekannt, die jedoch anweridungstechnische Mängel aufweisen.

Gelbfärbende faserreaktive Farbstoffe haben häufig den technischen Nachteil, daß sie mehr oder weniger phototrop sind, d. h. daß der Farbton der mit ihnen erhältlichen Färbungen im gedämpften Licht und im Tageslicht unterschiedliche Farbnuancen aufweist. Insbesondere kritisch ist dieser Effekt bei Kombinationsfärbungen mit rot- und blaufärbenden Farbstoffen in bestimmten Nuancen, wie in Beige, Braun und Grün. Dieser Nachteil führt zu Problemen beim Mustern der gefärbten Produktionspartien in den Textilfärbereien.
Es sind einige Monoazofarbstoffe aus Benzol-azo-benzol- und der Naphthalinazo-benzol-Reihe bekannt, die wegen ihrer interessanten Nuance und ihrer guten färberischen Eigenschaften geschätzt werden, die jedoch wegen ihrer nachteiligen Phototropie verbesserungswürdig erscheinen. Andererseits sind Azofarbstoffe mit einer Pyrazolon-Kupplungskomponente wenig phototrop, haben jedoch häufig Mängel in ihren färberischen Eigenschaften.
Mit der vorliegenden Erfindung wurden nunmehr Farbstoffmischungen von gelbfärbenden Farbstoffen gefunden, die überraschenderweise weniger phototrope Färbungen liefern, als nach den Anteilen der Einzelfarbstoffe in den Mischungen zu erwarten war.

Die Erfindung betrifft somit Farbstoffmischungen, die einen oder mehrere, wie zwei oder drei, bevorzugt 1 oder 2, Farbstoffe der nachstehend angegebenen und definierten allgemeinen Formel (1a) oder der nachstehend angegebenen und definierten allgemeinen Formel (1b) oder der allgemeinen Formeln (1a) und (1b) und einen oder mehrere, wie zwei oder drei, bevorzugt 1 oder 2, Farbstoffe der nachstehend angegebenen und definierten allgemeinen Formel (2a) oder (2b) oder (2c) oder einer Kombination aus den Farbstoffen der Formeln (2a) bis (2c) in einem molaren Verhältnis der Farbstoffe (1a) oder (1b) oder (1a) und (1b) zu den Farbstoffen (2a) oder (2b) oder (2c) oder einer Kombination aus den Farbstoffen (2a) bis (2c) von 70 : 30 bis 30 : 70, vorzugsweise von 60 : 40 bis 40 : 60, enthalten:

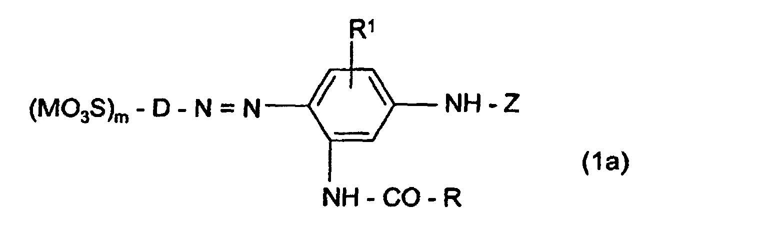

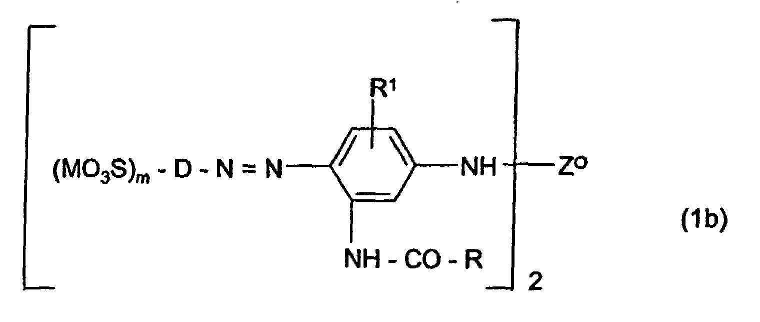

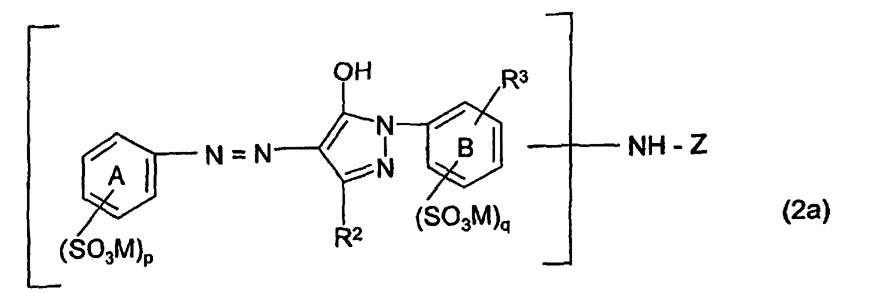

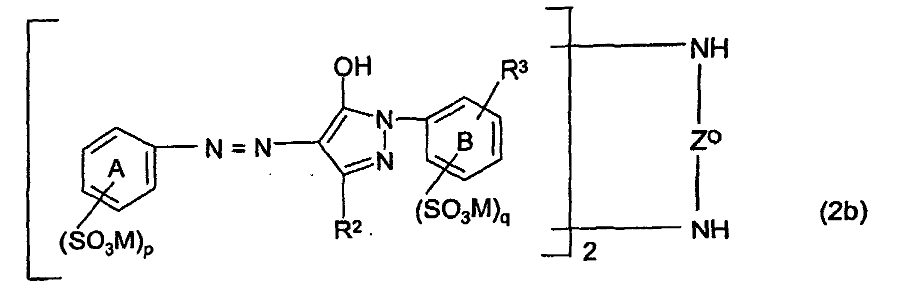

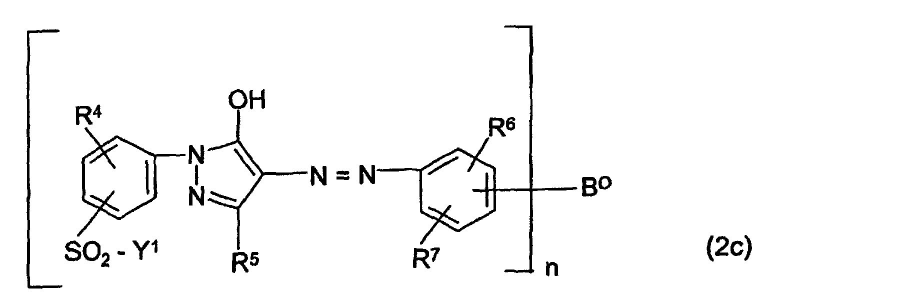

in welchen bedeuten:
- M: ist Wasserstoff oder ein Alkalimetall, wie Natrium, Kalium oder Lithium;
- D: ist der Rest des Benzols oder Naphthalins;
- Y¹: ist Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl, β-Chlorethyl und β-Sulfatoethyl und insbesondere bevorzugt Vinyl und β-Sulfatoethyl;
- R: ist Amino oder Alkyl von 1 bis 4 C-Atomen, wie Methyl, oder Alkyl von 1 bis 4 C-Atomen, wie Methyl und insbesondere Ethyl, das durch Carboxy, Sulfo, Sulfato, Phosphato, Hydroxy oder eine Gruppe -SO₂-Y² mit Y² einer für Y¹ angegebenen Bedeutung substituiert ist;
- R¹: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, bevorzugt Wasserstoff und Sulfo, wobei die Gruppe R¹ bevorzugt in para-Stellung zur Gruppe -NH-CO-R steht;
- m: ist die Zahl 1, 2 oder 3, bevorzugt 2 oder 3;
- Z^{o}: ist ein faserreaktiver Rest aus der Reihe der Halogenpyrimidine, wie der Difluor- oder Trifluor- oder Chlor-fluor- oder Chlor-difluor-pyrimidine, oder der gegebenenfalls durch eine Ether- oder Aminogruppierung substituierten Halogentriazine, wie Chlor- oder Fluortriazine, wobei der Rest des Halogentriazins auch mit einer faserreaktiven Gruppe der Vinylsulfonreihe entsprechend der allgemeinen Formel -SO₂-Y³ mit Y³ einer Bedeutung von Y¹ verbunden sein kann und diese Gruppe über ein Brückenglied, wie Phenylen, durch Methoxy, Ethoxy, Methyl, Ethyl, Sulfo und/oder Chlor substituiertes Phenylen, Alkylen von 1 bis 6 C-Atomen, das durch 1 oder 2 Heterogruppen, wie -O- und/oder -NH- , unterbrochen sein kann, oder eine Kombination dieser Gruppen, an eine an den Triazinrest gebundene Aminogruppe gebunden ist;
- Z°: ist ein bivalenter Rest der allgemeinen Formel (3) 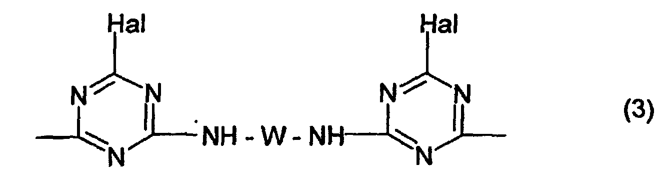 in welcher
Hal für Chlor oder Fluor steht und
W Phenylen, Alkylen, Phenylen-alkylen-phenylen, Phenylenalkenylen-phenylen oder Phenylen-phenylen oder ein Rest der allgemeinen Formel phen-G-phen ist, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen, bevorzugt aus 2 bis 4 C-Atomen, bestehen und durch Sulfo oder Carboxy substituiert und/oder durch 1 oder 2 Heterogruppen, wie -O- und -NH-, unterbrochen sein können und die Alkenylenreste solche von 2 bis 4 C-Atomen, bevorzugt der Vinyliden-Rest, sind, und wobei phen gleich Phenylen der obigen Bedeutung ist und G eine Gruppe -O-, -NH- , -CO- oder -NH-CO-NH- ist ;
R² ist Methyl oder Carboxy;
R³ ist Wasserstoff, Halogen, wie Chlor, Alkyl von 1 bis 4 C-Atomen, wie Methyl oder Ethyl, oder Alkoxy von 1 bis 4 C-Atomen, wie Methoxy oder Ethoxy, bevorzugt Wasserstoff, Methyl und Chlor;
p ist die Zahl Null, 1 oder 2 und
q ist die Zahl Null, 1 oder 2,
wobei die Summe von (p+q) die Zahl 1, 2 oder 3 ist und die Gruppe -SO₃M im Falle von p gleich Null oder q gleich Null für Wasserstoff steht;
in Formel (2a) ist die Gruppe -NH-Z an den Benzolkern A oder an den Benzolkern B gebunden;
in Formel (2b) ist die eine Aminogruppe des Brückengliedes -NH-Z°-NH- an den Benzolkern A des einen Monoazorestes und die andere Aminogruppe an den Benzolkern A des anderen Monoazorestes gebunden oder beide NH-Gruppen sind an beide A oder an beide B gebunden;
- R⁴: ist Wasserstoff, Sulfo, Alkyl von 1 bis 4 C-Atomen, wie Methyl oder Ethyl, oder Alkoxy von 1 bis 4 C-Atomen, wie Methoxy oder Ethoxy, bevorzugt Wasserstoff und Methoxy;
- R⁵: ist Methyl oder Carboxy;
- R⁶: ist Wasserstoff, Sulfo, Carboxy, Alkyl von 1 bis 4 C-Atomen, wie Ethyl oder Methyl, oder Alkoxy von 1 bis 4 C-Atomen, wie Ethoxy oder Methoxy, bevorzugt Wasserstoff, Sulfo oder Methyl;
- R⁷: ist Wasserstoff, Sulfo, Alkyl von 1 bis 4 C-Atomen, wie Ethyl oder Methyl, oder Alkoxy von 1 bis 4 C-Atomen, wie Ethoxy oder Methoxy, bevorzugt Wasserstoff;
- n: ist die Zahl 1 oder 2;
- B^{o}: ist Wasserstoff, falls n gleich 1 ist, und ist im Falle von n gleich 2 eine direkte kovalente Bindung, Alkylen, Alkenylen oder Alkylen-phenylenalkylen, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen, bevorzugt aus 2 bis 4 C-Atomen, bestehen und durch Sulfo oder Carboxy substituiert und/oder durch 1 oder 2 Heterogruppen, wie -O- und -NH-, unterbrochen sein können und die Alkenylenreste solche von 2 bis 4 C-Atomen, bevorzugt der Vinyliden-Rest, sind, oder B° ist eine Gruppe des oben definierten Formelrestes Z^{o}.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Thiosulfatogruppen Gruppen entsprechend der allgemeinen Formel -S-SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M , in welchen M die obengenannte Bedeutung besitzt.

Im nachfolgenden können die Farbstoffe der allgemeinen Formeln (1a) und (1b) pauschal als "Farbstoffe (1)" und die Farbstoffe (2a), (2b) und (2c) pauschal als "Farbstoffe (2)" bezeichnet werden.

Die Farbstoffe (1) und (2) sind allgemein bekannt und zahlreich in deutschen, britischen und europäischen Patentanmeldungs-Veröffentlichungen sowie in britischen und U.S.-Patentschriften beschrieben oder können analog den dort gemachten Angaben hergestellt werden.

In den Farbstoffen der allgemeinen Formel (1a) und (2a) ist der Formelrest Z bevorzugt ein Rest der allgemeinen Formel (4b), (4c) oder (4d) 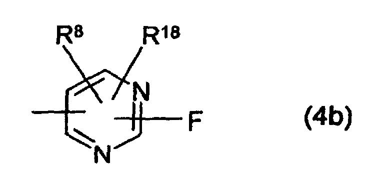 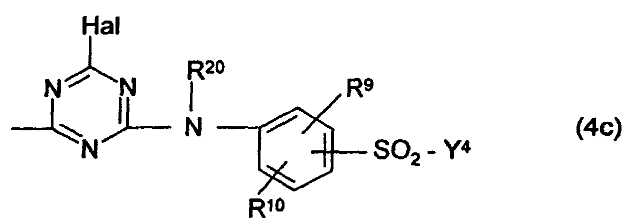 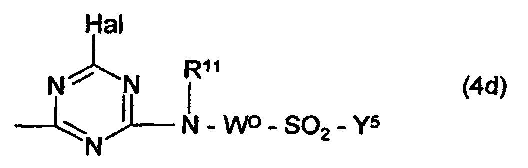 in welchen bedeuten:
- Hal: hat eine der obengenannten Bedeutungen;
- R⁸: ist Wasserstoff, Chlor oder Fluor, bevorzugt Wasserstoff oder Chlor;
- R¹⁸: ist Wasserstoff oder Fluor, bevorzugt Fluor;
- R⁹: ist Wasserstoff, Alkyl von 1 bis 4 C-Atomen, wie Methyl oder Ethyl, oder Alkoxy von 1 bis 4 C-Atomen, wie Methoxy oder Ethoxy, bevorzugt Wasserstoff, Methoxy oder Methyl, insbesondere Wasserstoff;
- R¹⁰: ist Wasserstoff, Alkyl von 1 bis 4 C-Atomen, wie Methyl oder Ethyl, oder Alkoxy von 1 bis 4 C-Atomen, wie Methoxy oder Ethoxy, bevorzugt Wasserstoff oder Methoxy, insbesondere Wasserstoff;
- R²⁰: ist Wasserstoff oder Alkyl von 1 bis 4 C-Atomen, wie Methyl und Ethyl, bevorzugt Wasserstoff;
- Y⁴: hat eine der für Y¹ genannte Bedeutungen;
- Y⁵: hat eine der für Y¹ genannte Bedeutungen;
- R¹¹: ist Wasserstoff, Alkyl von 1 bis 4 C-Atomen, wie Methyl oder Ethyl, Phenyl oder durch Chlor, Sulfo, Methyl oder Carboxy substituiertes Phenyl und ist bevorzugt Wasserstoff, Methyl, Ethyl oder Phenyl;
- W^{o}: ist Alkylen von 1 bis 4 C-Atomen, insbesondere n-Ethylen und n-Propylen, oder ist Alkylen von 3 bis 6 C-Atomen, das durch 1 oder 2 Heterogruppen aus der Gruppe der Formeln -O- und -NH- unterbrochen ist, wie eine Gruppe der Formel -(CH₂)₂-O-(CH₂)₂- , oder ist ein Rest der Formel alk-phen oder phen-alk oder phen , in welchen alk Methylen, n-Ethylen oder n-Propylen, bevorzugt Methylen oder n-Ethylen, bedeutet, und phen Phenylen ist, das durch 1 oder 2 Substituenten aus der Gruppe Sulfo, Alkyl von 1 bis 4 C-Atomen, wie Ethyl und insbesondere Methyl, und Alkoxy von 1 bis 4 C-Atomen, wie Ethoxy und insbesondere Methoxy, substituiert sein kann und bevorzugt unsubstituiertes Phenylen ist.

Von den Halogen-pyrimidin-Resten der allgemeinen Formel (4b) sind insbesondere solche der allgemeinen Formel (4e) und (4f) 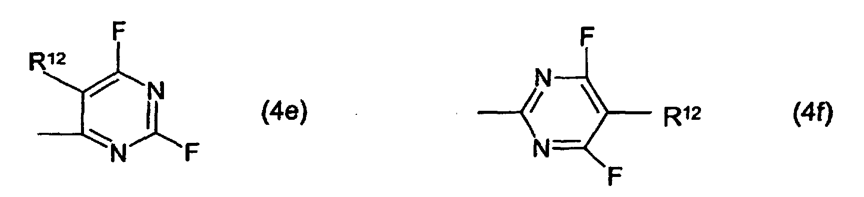 hervorzuheben, in welchen R¹² Wasserstoff oder Chlor bedeutet, hiervon insbesondere 5-Chlor-2,6-difluor-pyrimidin-4-yl, 2,6-Difluor-pyrimidin-4-yl und 4,6-Difluor-pyrimidin-2-yl.

In der allgemeinen Formel (2c) ist die Gruppe -SO₂-Y¹ bevorzugt in meta- oder para-Stellung zum N-Atom des Pyrazolonrestes an den Benzolkern gebunden; ebenso steht in Formel (4c) die Gruppe -SO₂-Y⁴ im Benzolkern bevorzugt in meta- oder para-Stellung zur Gruppe NH. Ist in der allgemeinen Formel (4d) die Gruppe -SO₂-Y⁵ an einen Benzolkern von W° gebunden, so befindet sich diese bevorzugt in meta-Stellung oder para-Stellung zur Gruppe -N(R¹¹)- und insbesondere bevorzugt in para-Stellung zum Alkylenrest, falls W° den Rest alk-phen bedeutet.

In den erfindungsgemäßen Farbstoffmischungen sind bevorzugt von den Farbstoffen der allgemeinen Formel (1a) solche enthalten, in welchen D den Rest des Naphthalins bedeutet und m die Zahl 3 ist, hiervon der Rest (MO₃S)ₘ-Dbevorzugt 3,6,8- oder 4,6,8-Trisulfo-naphth-2-yl, R Amino bedeutet und Z eine der obengenannten, insbesondere bevorzugten Bedeutungen besitzt, des weiteren solche, in welchen der Rest (MO₃S)ₘ-D- Disulfophenyl ist, bevorzugt hiervon 2,4-Disulfo-phenyl und 2,5-Disulfo-phenyl, R Amino ist und Z eine der obengenannten, insbesondere bevorzugten Bedeutungen, hat, und des weiteren solche, in denen der Rest (MO₃S)ₘ-D- einen Disulfonaphthyl-Rest bedeutet, bevorzugt 5,7- oder 4,8-Disulfo-naphth-2-yl ist, R Methyl bedeutet und Z eine der obengenannten, insbesondere bevorzugten, Bedeutungen besitzt.

Monoazofarbstoffe entsprechend der allgemeinen Formel (2a), die bevorzugt in den erfindungsgemäßen Farbstoffmischungen enthalten sind, sind beispielsweise solche der allgemeinen Formel (5a) 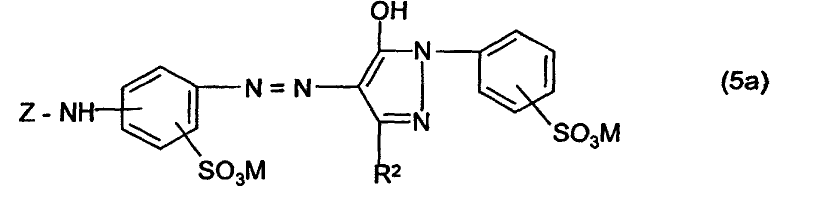 in welchen M und R² eine der obengenannten Bedeutungen haben, Z eine der obengenannten, insbesondere bevorzugten, Bedeutungen besitzt, die Gruppe -SO₃M in der Diazokomponente bevorzugt in ortho-Stellung zur Azogruppe an den Benzolkern gebunden ist und die Gruppe -SO₃M in der Kupplungskomponente bevorzugt in para-Stellung zum N-Atom des Pyrazolonrestes an den Benzolkern gebunden ist, des weiteren solche der allgemeinen Formel (5c)

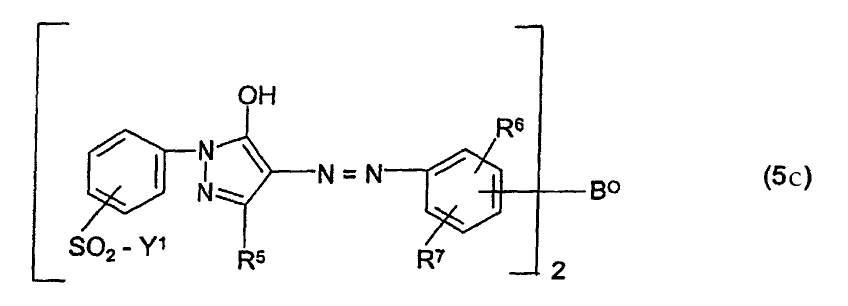

in welchen R⁵ und Y¹ eine der obengenannten Bedeutungen haben, R⁶ Wasserstoff, Methyl oder Sulfo bedeutet, R⁷ Wasserstoff oder Sulfo, bevorzugt Sulfo, ist und B^{o} eine direkte Bindung, Methylen, n-Ethylen oder Vinyliden ist.

Monoazofarbstoffe entsprechend der allgemeinen Formel (2c), die bevorzugt in den erfindungsgemäßen Farbstoffmischungen enthalten sind, sind beispielsweise solche der allgemeinen Formel (5b) 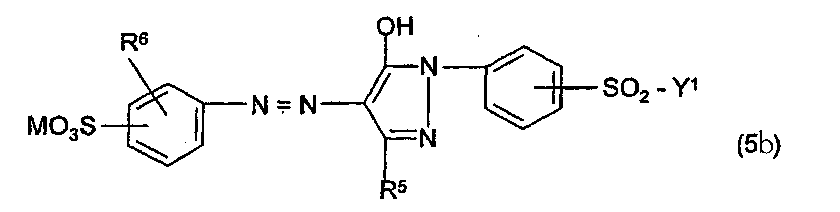 in welchen M, R⁵, R⁶ und Y¹ eine der obengenannten Bedeutungen haben und die Gruppe -SO₂-Y¹ an den Benzolkern bevorzugt in meta- oder para-Stellung zum N-Atom des Pyrazolonrestes gebunden ist.

Die Farbstoffe der allgemeinen Formel (2c) können, insbesondere bei gleichem Chromophor, innerhalb der Bedeutung von Y¹ unterschiedliche faserreaktive Gruppen -SO₂-Y¹ besitzen (gleiches gilt auch für die Farbstoffe der allgemeinen Formel (1a) und (2a), falls sie eine Gruppe -SO₂-Y² , -SO₂-Y³ , -SO₂-Y⁴ bzw. -SO₂-Y⁵ enthalten, bezüglich Y², Y³, Y⁴ und Y⁵). Insbesondere können die Farbstoffmischungen Farbstoffe gleichen Chromophors entsprechend den hier angesprochenen allgemeinen Formeln enthalten, in denen die faserreaktiven Gruppen -SO₂-Y¹ (bzw. -SO₂-Y², -SO₂-Y³ , -SO₂-Y⁴ und -SO₂-Y⁵) zum einen Vinylsulfonylgruppen und zum anderen β-Chlorethylsulfonyl- oder β-Thiosulfatoethylsulfonyl- oder bevorzugt β-Sulfatoethylsulfonyl-Gruppen sind. Enthalten die Farbstoffgemische die jeweiligen Farbstoffkomponenten teilweise als Farbstoff mit der Vinylsulfonylgruppe, so liegt der Farbstoffanteil des jeweiligen Farbstoffes mit der Vinylsulfonylgruppe bis zu etwa 30 Mol-%, bezogen auf den jeweiligen Farbstoffchromophor, vor.

Gruppen entsprechend den allgemeinen Formeln (6a), (6b) und (6c)

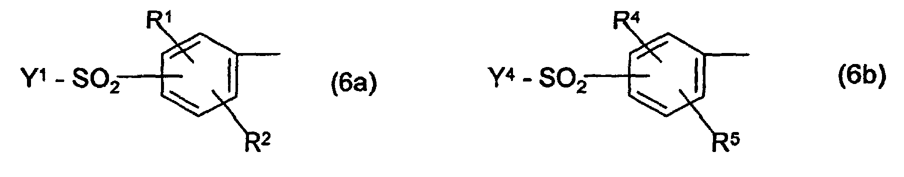

phen - SO₂ - Y⁵ (6c)

die in den Farbstoffen (1) und (2) enthalten sind oder sein können, sind beispielsweise 3-(β-Sulfatoethylsulfonyl)-phenyl, 4-(β-Sulfatoethylsulfonyl)-phenyl, 2-Methyl-5-(β-sulfatoethylsulfonyl)-phenyl, 2-Methoxy-5-(β-sulfatoethylsulfonyl)-phenyl, 4-Methyl-3-(β-sulfatoethylsulfonyl)-phenyl, 2,5-Dimethyl-4-(β-sulfatoethylsulfonyl)-phenyl, 2,6-Dimethyl-4-(β-sulfatoethylsulfonyl)-phenyl, 2-Methoxy-4-(β-sulfatoethylsulfonyl)-phenyl, 4-Methoxy-5-(β-sulfatoethylsulfonyl)-phenyl, 2-Methoxy-5-methyl-4-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl und 2-Sulfo-4-(β-sulfatoethylsulfonyl)-phenyl, hiervon insbesondere 3- oder 4-(β-Sulfatoethylsulfonyl)-phenyl, sowie deren Derivate, in welchen die β-Sulfatoethylsulfonyl-Gruppe durch die Vinylsulfonyloder β-Thiosulfato-ethylsulfonyl- oder β-Chlorethylsulfonyl-Gruppe ausgetauscht ist.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 10 bis 80 Gew.-%, bezogen auf die enthaltene Präparation, enthalten. Die Puffersubstanzen liegen in der Regel in einer Gesamtmenge von bis zu 5 Gew.-%, bezogen auf die Präparation, vor. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen können weitere faserreaktive Farbstoffe, die zum Nuancieren der Farbstoffmischung dienen, in einer Menge von bis zu 5 Gew.-% enthalten. Diese "Nuancierfarbstoffe" können durch übliches Vermischen hinzugefügt oder aber auch auf chemischem Wege im selben Reaktionsansatz zusammen mit der oben beschriebenen Synthese einer erfindungsgemäßen Farbstoffmischung hergestellt und in die Farbstoffmischung eingebracht werden, wenn eine oder mehrere der Komponenten des Nuancierfarbstoffes mit den Komponenten der Farbstoffe der Formeln (1) und/oder (2) identisch sind.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie bspw. in den PCT-Patentanmeldungs-Veröffentlichungen Nrs. WO 96/37641 und WO 96/37642 sowie in den europäischen Patentanmeldungs-Veröffentlichungen Nrs. 0 538 785 und 0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, bspw. im Verhältnis Ware zu Flotte von 1 : 5 bis 1 : 100, bevorzugt 1 : 6 bis 1 : 30, unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur (Kaltklotzverweilverfahren) oder erhöhter Temperatur, beispielsweise bis zu etwa 60°C, oder in kontinuierlicher Färbeweise, bspw. mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben demüblichen Wasserdampf von 101 bis 103°C kann auch überhitzter Darrpf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie bspw. Mischungen aus Natronlauge und Wasserglas.

Die erfindungsgemäßen Farbstoffmischungen zeichnen sich auf den Cellulosefasermaterialien bei Anwendung in den Färbe- und Druckverfahren durch eine höhe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Coloirists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperaturvon etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, gelbe Färbungen mit guten Echtheitseigenschaften und geringer Photochromie.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen werden im allgemeinen in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, genannten Ausgangsverbindungen in Form der freien Säure oder in Form ihrer Salze, vorzugsweise Alkalimetallsalze, wie Natrium- oder Kaliumsalze, in die Synthese eingesetzt werden.

### Beispiel 2

Man vermischt 1000 Teile einer wäßrigen Syntheselösung mit 150 Teilen des Farbstoffes der Formel (A-2) mit 500 Teilen einer wäßrigen Syntheselösung mit 80 Teilen des Farbstoffes der Formel (B-2) 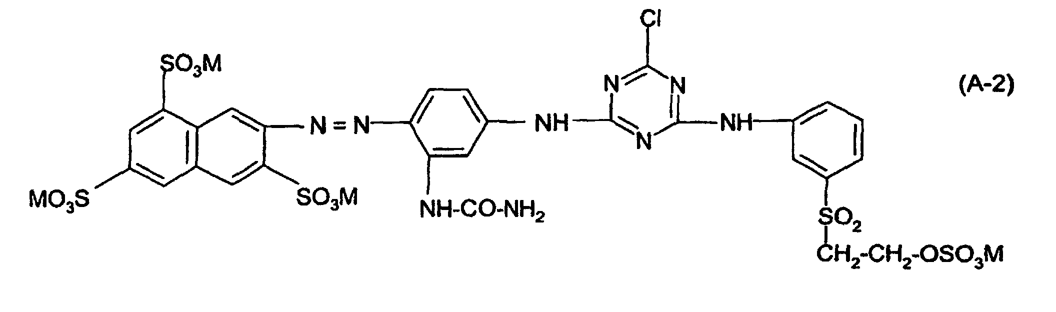 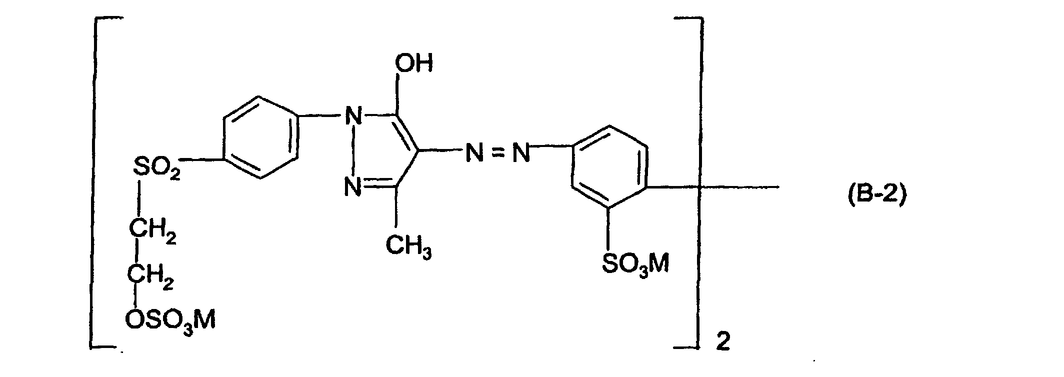 (in welchen M die obengenannte Bedeutung besitzt, bevorzugt Natrium ist) und isoliert die erfindungsgemäße Farbstoffmischung nach Vereinigung der beiden Lösungen in üblicher Weise, beispielsweise durch Sprühtrocknung der Farbstofflösung. Die erhaltene erfindungsgemäße, aus der Synthese stammende Elektrolytsalze, wie Natriumchlorid und Natriumsulfat, enthaltende Farbstoffmischung mit einem molaren Mischungsverhältnis des Farbstoffes (A-2) zu Farbstoff (B-2) von 65 : 35 zeigt sehr gute färberische Eigenschaften und liefert beispielsweise auf cellulosischen Fasermaterialien, wie Baumwolle, oder Celluloseregeneratfasern, im einen für faserreaktive Farbstoffe üblichen Klotz-Kaltverweil-Verfahren farbstarke und egale gelbe Färbungen.

### Beispiele 3 bis 11

In den nachfolgenden Tabellenbeispielen sind weitere erfindungsgemäße Farbstoffmischungen mit Farbstoffen beschrieben, deren Formeln (mit M der oben angegebenen Bedeutung) im Anschluß an die Tabelle angegeben sind. Die Mischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke gelbe Färbungen und Drucke mit guten Echtheitseigenschaften und einem guten Farbaufbau. In der Rubrik MV wird das molare Mischungsverhältnis der beiden Farbstoffe zueinander in Mol-% angegeben.

| Bsp. | Farbstoff (1) | Farbstoff (2) | MV von (1) : (2) |
|---|---|---|---|
| 3 | Formel (A-2) | Formel (B-3) | 55 : 45 |
| 4 | Formel (A-4) | Formel (B-3) | 61 : 39 |
| 7 | Formel (A-7) | Formel (B-5) | 40 : 60 |
| 8 | Formel (A-8) | Formel (B-6) | 50 : 50 |
| 9 | Formel (A-9) | Formel (B-7) | 42 : 58 |
| 10 | Formel (A-9) | Formel (B-8) | 43 : 57 |

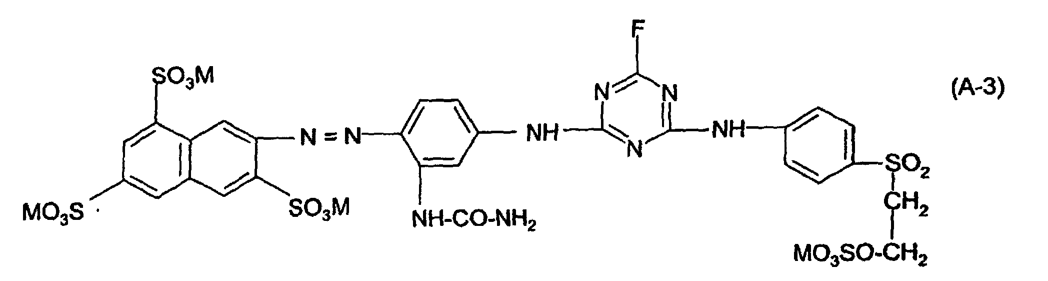

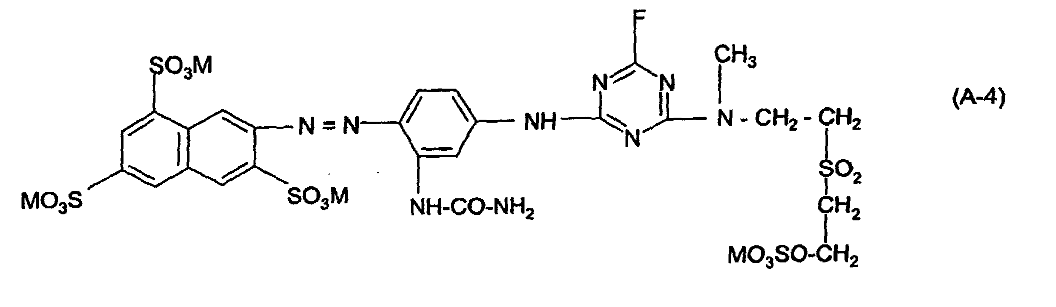

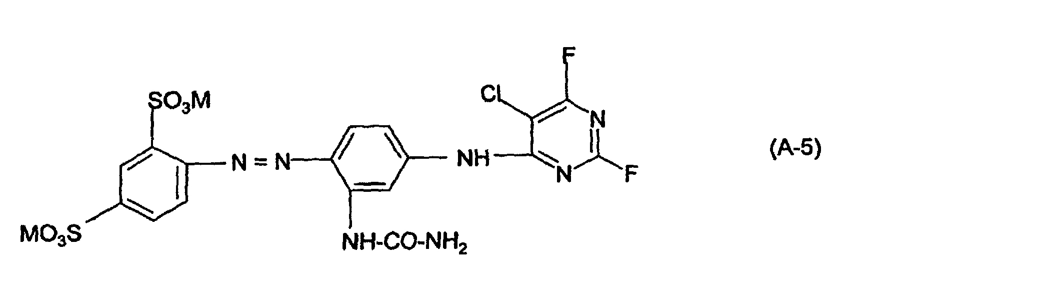

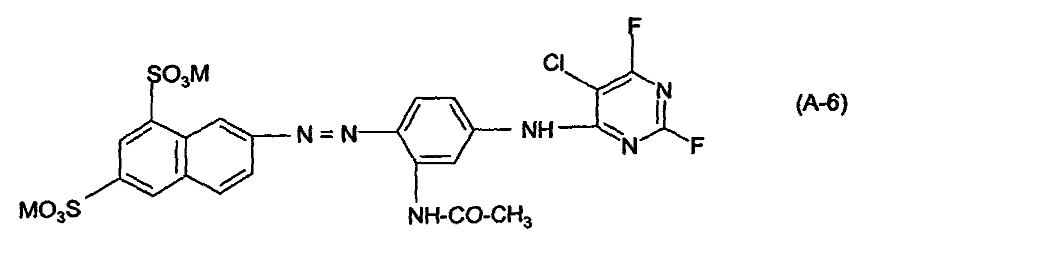

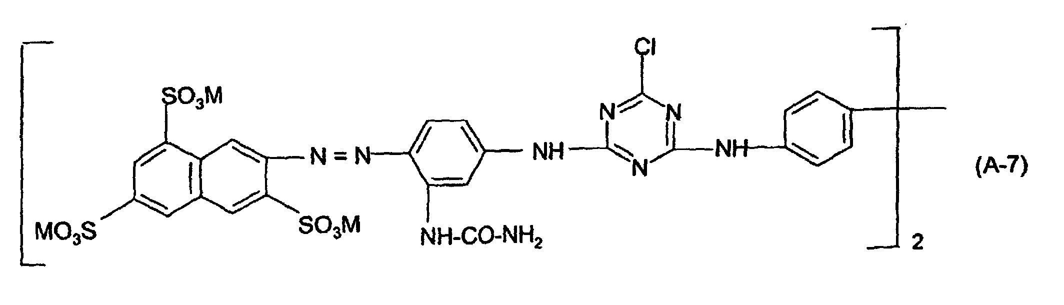

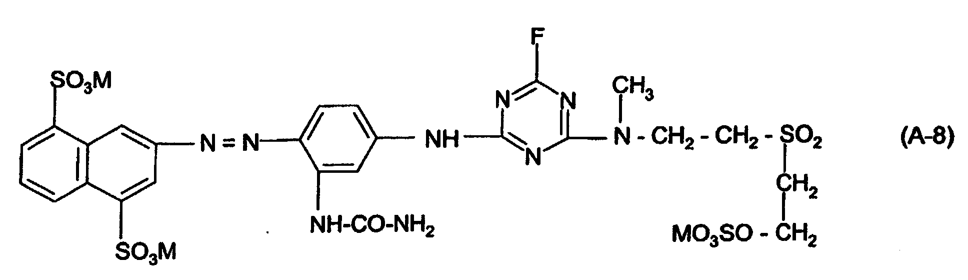

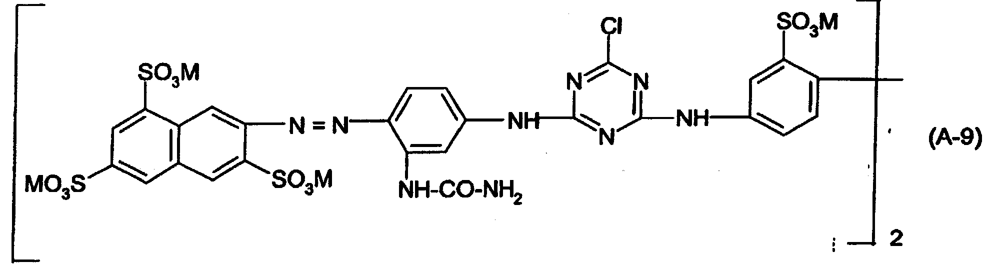

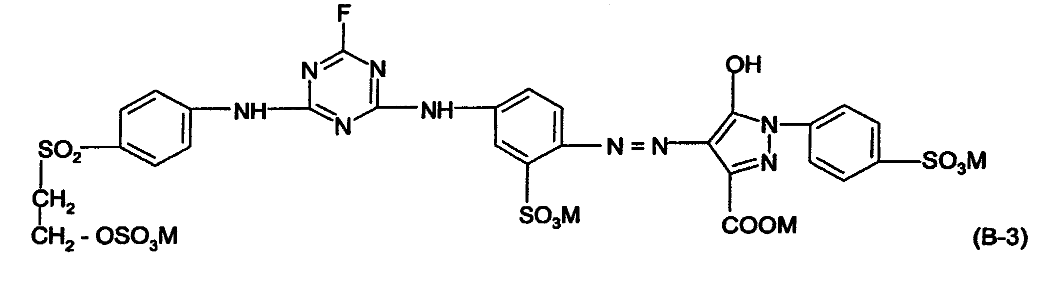

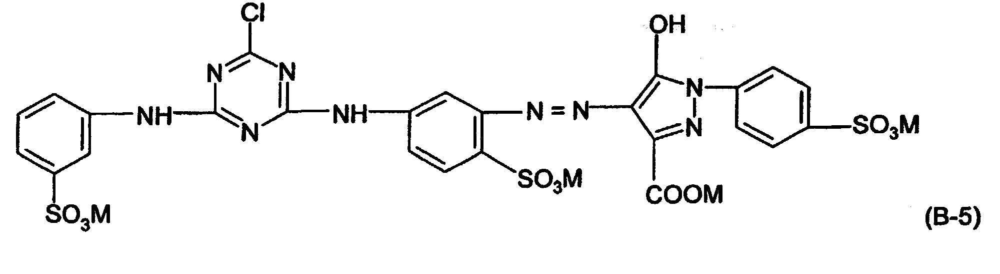

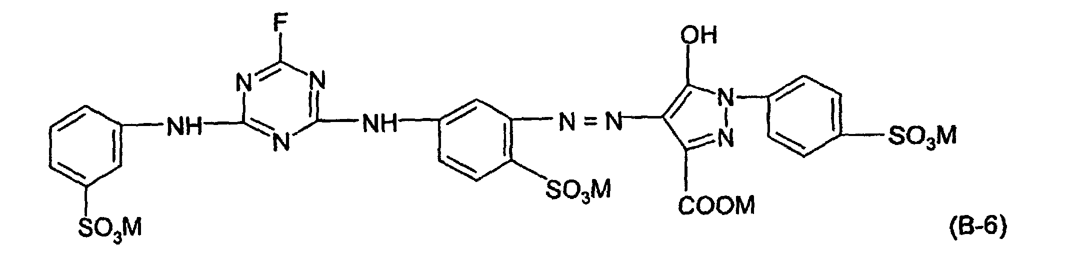

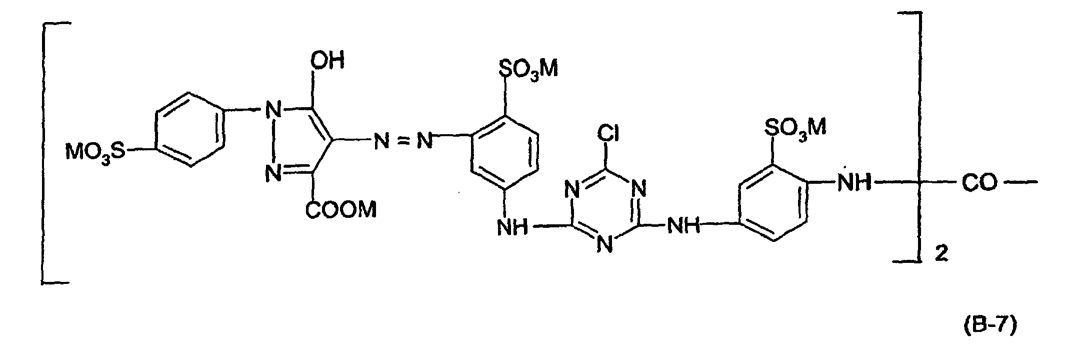

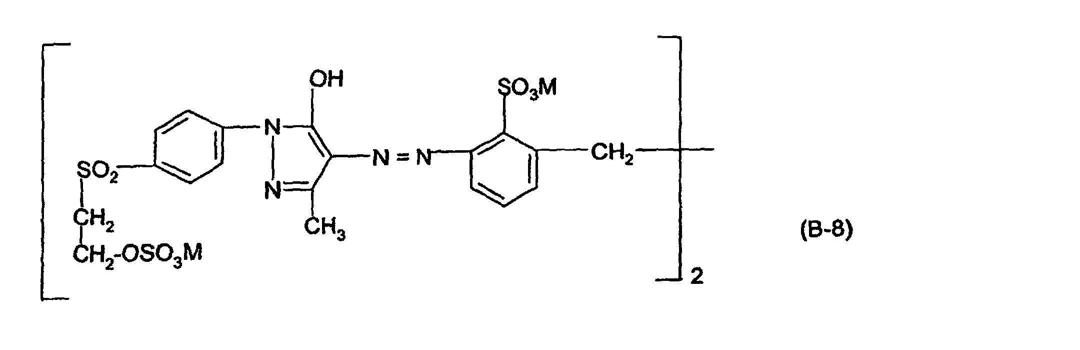

## Patentansprüche

1. Farbstoffmischung, enthaltend einen oder mehrere Farbstoffe der nachstehend angegebenen und definierten allgemeinen Formel (1a) oder der nachstehend angegebenen und definierten allgemeinen Formel (1b) oder der allgemeinen Formeln (1a) und (1b) und einen oder mehrere Farbstoffe der nachstehend angegebenen und definierten allgemeinen Formel (2a) oder (2b) oder (2c) oder einer Kombination aus den Farbstoffen der Formeln (2a) bis (2c) in einem molaren Verhältnis der Farbstoffe (1a) oder (1b) oder (1a) und (1b) zu den Farbstoffen (2a) oder (2b) oder (2c) oder einer Kombination aus diesen Farbstoffen (2a) bis (2c) von 70 : 30 bis 30 : 70 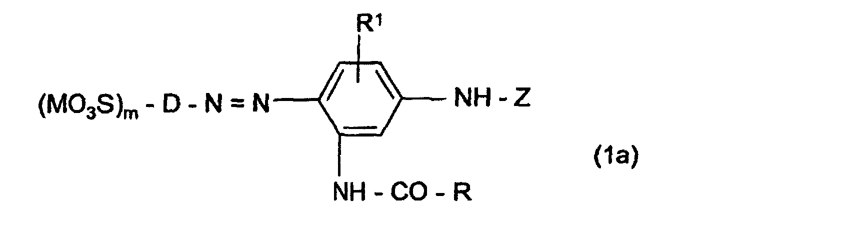 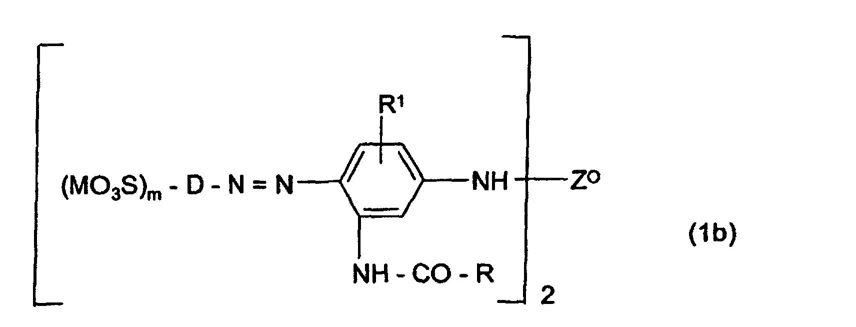 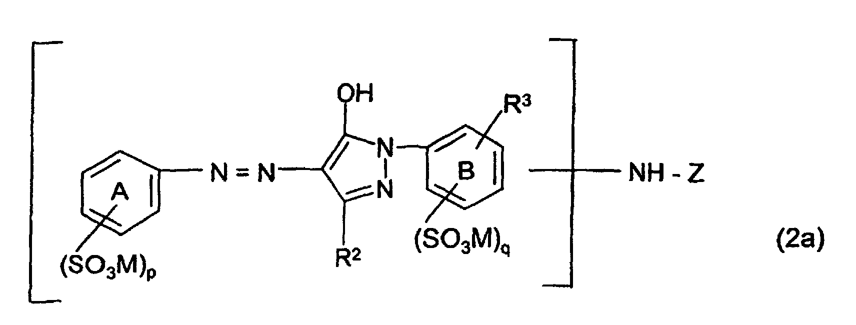 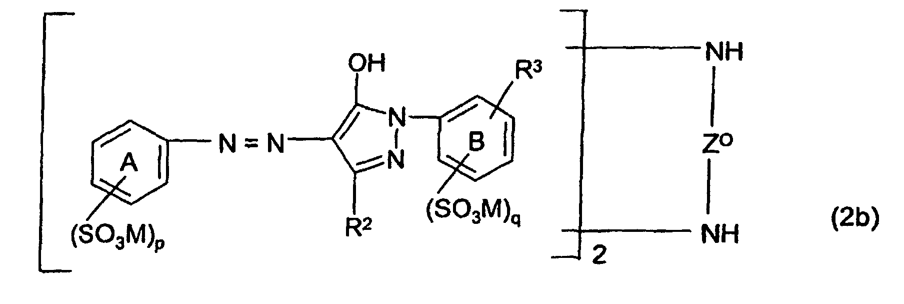 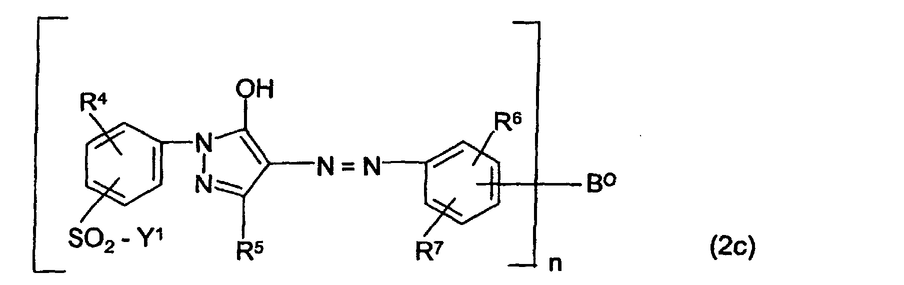 in welchen bedeuten:
M ist Wasserstoff oder ein Alkalimetall;
D ist der Rest des Benzols oder Naphthalins;
Y¹ ist Vinyl oder ist Ethyl, das in β-Stellung durch einen alkalisch eliminierbaren Substituenten substituiert ist;
R ist Amino oder Alkyl von 1 bis 4 C-Atomen oder durch Carboxy, Sulfo, Phosphato, Hydroxy oder eine Gruppe -SO-Y² mit Y² einer für Y¹ angegebenen Bedeutung substituiertes Alkyl von 1 bis 4 C-Atomen;
R¹ ist Wasserstoff, Alkyl von 1 bis 4 C-Atomen, Alkoxy von 1 bis 4 C-Atomen oder Sulfo;
m ist die Zahl 1, 2 oder 3;
Z ist ein faserreaktiver Rest aus der Reihe der Halogenpyrimidine, oder der gegebenenfalls durch eine Ether- oder Aminogruppierung substituierten Halogentriazine, wobei der Rest des Halogentriazins auch mit einer Gruppe der Formel -SO₂-Y³ mit Y³ einer Bedeutung von Y¹ verbunden sein kann, die über ein Brückenglied an eine an den Triazinrest gebundene Aminogruppe gebunden ist;
Z^{o} ist ein bivalenter Rest der allgemeinen Formel (3) 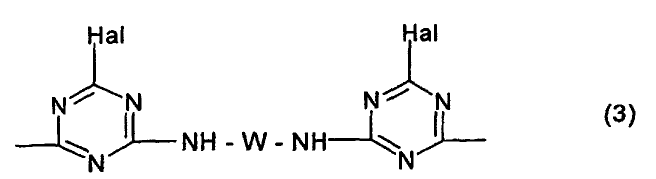 in welcher
Hal für Chlor oder Fluor steht und
W Phenylen, Alkylen, Phenylen-alkylen-phenylen, Phenylenalkenylen-phenylen oder Phenylen-phenylen oder ein Rest der allgemeinen Formel phen-G-phen ist, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen bestehen und durch Sulfo oder Carboxy substituiert und/oder durch 1 oder 2 Heterogruppen unterbrochen sein können und die Alkenylenreste solche von 2 bis 4 C-Atomen sind, und wobei phen gleich Phenylen der obigen Bedeutung ist und G eine Gruppe -O-, -NH-, -CO- oder - NH-CO-NH- ist ;
R² ist Methyl oder Carboxy;
R³ ist Wasserstoff, Halogen, Alkyl von 1 bis 4 C-Atomen oder Alkoxy von 1 bis 4 C-Atomen;
p ist die Zahl Null, 1 oder 2 und
q ist die Zahl Null, 1 oder 2,
wobei die Summe von (p + q) die Zahl 1, 2 oder 3 ist und die Gruppe -SO₃M im Falle von p gleich Null oder q gleich Null für Wasserstoff steht;
in Formel (2a) ist die Gruppe -NH-Z an den Benzolkern A oder an den Benzolkern B gebunden;
in Formel (2b) ist die eine Aminogruppe des Brückengliedes -NH-Z^{o}-NH- an den Benzolkern A des einen Monoazorestes und die andere Aminogruppe an den Benzolkern B des anderen Monoazorestes gebunden oder beide NH-Gruppen sind an beide A oder an beide B gebunden;
R⁴ ist Wasserstoff, Sulfo, Alkyl von 1 bis 4 C-Atomen oder Alkoxy von 1 bis 4 C-Atomen;
R⁵ ist Methyl oder Carboxy;
R⁶ ist Wasserstoff, Sulfo, Carboxy, Alkyl von 1 bis 4 C-Atomen oder Alkoxy von 1 bis 4 C-Atomen;
R⁷ ist Wasserstoff, Sulfo, Alkyl von 1 bis 4 C-Atomen oder Alkoxy von 1 bis 4 C-Atomen;
n ist die Zahl 1 oder 2;
B^{o} ist Wasserstoff, falls n gleich 1 ist, und ist im Falle von n gleich 2 eine direkte kovalente Bindung, Alkylen, Alkenylen oder Alkylenphenylen-alkylen, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen bestehen und durch Sulfo oder Carboxy substituiert und/oder durch 1 oder 2 Heterogruppen unterbrochen sein können und die Alkenylenreste solche von 2 bis 4 C-Atomen sind, oder ist eine Gruppe des oben definierten Formelrestes Z^{o}.

2. Farbstoffmischung nach Anspruch 1, **dadurch gekennzeichnet, daß** Z ein Rest der allgemeinen Formel (4b) 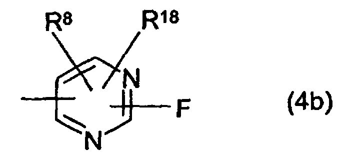 ist, in welcher R⁸ Wasserstoff, Chlor oder Fluor und R¹⁸ Wasserstoff oder Fluor bedeuten.

3. Farbstoffmischung nach Anspruch 1, **dadurch gekennzeichnet, daß** Z ein Rest der allgemeinen Formel (4c) oder (4d) 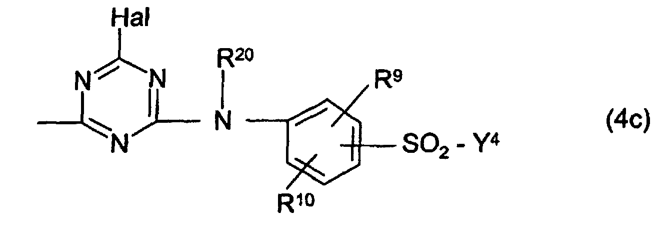 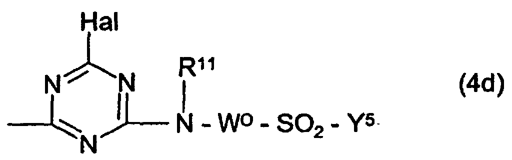 ist, in welchen Hal Chlor oder Fluor ist, R⁹ Wasserstoff, Alkyl von 1 bis 4 C-Atomen oder Alkoxy von 1 bis 4 C-Atomen ist, R¹⁰ Wasserstoff, Alkyl von 1 bis 4 C-Atomen oder Alkoxy von 1 bis 4 C-Atomen ist, R²⁰ Wasserstoff oder Alkyl von 1 bis 4 C-Atomen ist, R¹¹ Wasserstoff, Alkyl von 1 bis 4 C-Atomen, Phenyl oder durch Chlor, Sulfo, Methyl oder Carboxy substituiertes Phenyl ist, Y⁴ Vinyl ist oder Ethyl ist, das in β-Stellung durch einen alkalisch eliminierbaren Substituenten substituiert ist, Y⁵ eine der für Y⁴ genannte Bedeutungen hat und W^{o} Alkylen von 1 bis 4 C-Atomen ist oder Alkylen von 3 bis 6 C-Atomen, das durch 1 oder 2 Heterogruppen aus der Gruppe der Formeln -O- und -NHunterbrochen ist, oder ein Rest der Formel alk-phen oder phen-alk oder phen ist, in welchen alk Methylen, n-Ethylen oder n-Propylen bedeutet und phen Phenylen ist, das durch 1 oder 2 Substituenten aus der Gruppe Sulfo, Alkyl von 1 bis 4 C-Atomen und Alkoxy von 1 bis 4 C-Atomen substituiert sein kann.

4. Farbstoffmischung nach mindestens einem der Ansprüche 1 bis 3, **dadurch gekennzeichnet, daß** R¹ in para-Stellung zur Gruppe -NH-CO-R steht.

5. Farbstoffmischung nach mindestens einem der Ansprüche 3 und 4, **dadurch gekennzeichnet, daß** R⁹ und R¹⁰ beide für Wasserstoff stehen.

6. Farbstoffmischung nach mindestens einem der Ansprüche 3 und 4, **dadurch gekennzeichnet, daß** R¹¹ Wasserstoff, Methyl, Ethyl oder Phenyl ist und W^{o} n-Ethylen, n-Propylen oder Alkylen von 3 bis 6 C-Atomen ist, das durch 1 oder 2 Heterogruppen aus der Gruppe der Formeln -O- und -NH- unterbrochen ist.

7. Farbstoffmischung nach mindestens einem der Ansprüche 1 bis 6, **dadurch gekennzeichnet, daß** Z⁰ ein Rest der allgemeinen Formel (3) 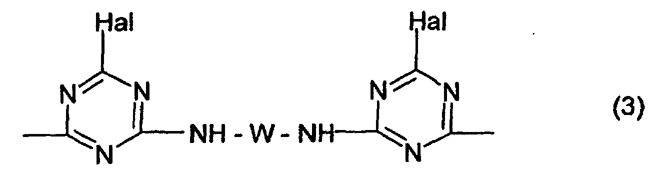 ist, in welcher Hal für Chlor oder Fluor steht, W Phenylen, Alkylen, Phenylen-alkylen-phenylen, Phenylen-alkenylen-phenylen oder Phenylen-phenylen oder ein Rest der allgemeinen Formel phen-G-phen ist, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen bestehen und durch Sulfo oder Carboxy substituiert und/oder durch 1 oder 2 Heterogruppen unterbrochen sein können und die Alkenylenreste solche von 2 bis 4 C-Atomen sind, und wobei phen gleich Phenylen der obigen Bedeutung ist und G eine Gruppe -O-, -NH-, -CO- oder -NH-CO-NH- ist.

8. Farbstoffmischung nach mindestens einem der Ansprüche 1 bis 7, **dadurch gekennzeichnet, daß** n die Zahl 1 ist und B^{o} Wasserstoff bedeutet.

9. Farbstoffmischung nach mindestens einem der Ansprüche 1 bis 7, **dadurch gekennzeichnet, daß** n die Zahl 2 ist und B^{o} eine direkte Bindung, Alkylen, Alkenylen oder Alkylen-phenylen-alkylen ist, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen bestehen und durch Sulfo oder Carboxy substituiert und/oder durch 1 oder 2 Heterogruppen unterbrochen sein können und die Alkenylenreste solche von 2 bis 4 C-Atomen sind.

10. Farbstoffmischung nach mindestens einem der Ansprüche 1 bis 7, **dadurch gekennzeichnet, daß** n die Zahl 2 ist und B° eine Gruppe der allgemeinen Formel (3) 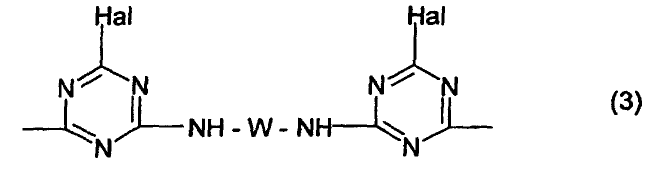 ist, in welchen Hal für Chlor oder Fluor steht, W Phenylen, Alkylen, Phenylen-alkylen-phenylen, Phenylen-alkenylen-phenylen oder Phenylen-phenylen oder ein Rest der allgemeinen Formel phen-G-phen ist, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen bestehen und durch Sulfo oder Carboxy substituiert und/oder durch 1 oder 2 Heterogruppen unterbrochen sein können und die Alkenylenreste solche von 2 bis 4 C-Atomen sind, und wobei phen gleich Phenylen der obigen Bedeutung ist und G eine Gruppe -O-, -NH-, -CO- oder -NH-CO-NH- ist.

11. Farbstoffmischung nach Anspruch 1, **dadurch gekennzeichnet, daß** der Farbstoff der allgemeinen Formel (2a) ein Farbstoff der allgemeinen Formel (5a) 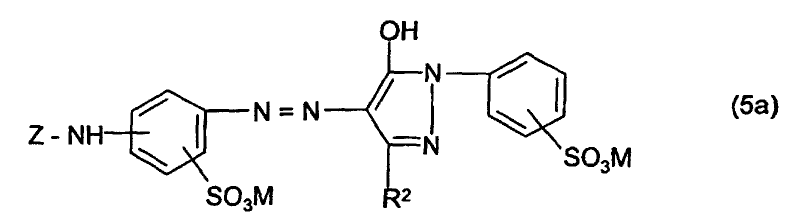 ist, in welcher M, R² und Z die in Anspruch 1 genannten Bedeutungen haben.

12. Farbstoffmischung nach Anspruch 1, **dadurch gekennzeichnet, daß** der Farbstoff der allgemeinen Formel (2c) ein Farbstoff der allgemeinen Formel (5c) 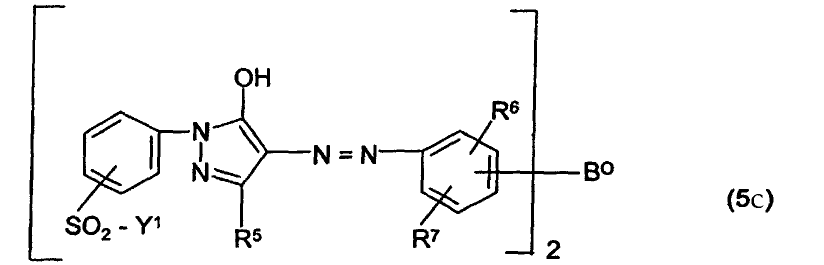 in welcher Y¹ und R⁵ die in Anspruch 1 genannten Bedeutungen haben, R⁶ Wasserstoff, Methyl oder Sulfo ist, R⁷ Wasserstoff oder Sulfo ist und B^{o} eine direkte Bindung oder Methylen, n-Ethylen oder Vinyliden ist.

13. Farbstoffmischung nach Anspruch 1, **dadurch gekennzeichnet, daß** der Farbstoff der allgemeinen Formel (2c) ein Farbstoff der allgemeinen Formel (5b) 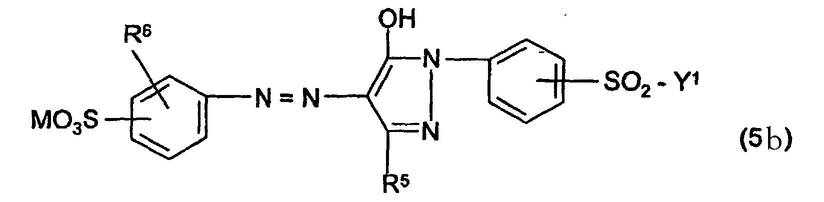 ist, in welcher M, R⁵, R⁶ und Y¹ die in Anspruch 1 genannten Bedeutungen haben.

14. Farbstoffmischung nach mindestens einem der Ansprüche 1 bis 13, **dadurch gekennzeichnet, daß** Y¹ Vinyl, β-Chlorethyl oder β-Sulfatoethyl ist.

15. Farbstoffmischung nach mindestens einem der Ansprüche 1 bis 13, **dadurch gekennzeichnet, daß** Y² Vinyl, β-Chlorethyl oder β-Sulfatoethyl ist.

16. Farbstoffmischung nach mindestens einem der Ansprüche 1 bis 13, **dadurch gekennzeichnet, daß** Y³ Vinyl, β-Chlorethyl oder β-Sulfatoethyl ist.

17. Farbstoffmischung nach mindestens einem der Ansprüche 1 bis 16, **dadurch gekennzeichnet, daß** der oder die Farbstoffe (1) und der oder die Farbstoffe (2) in einem molaren Mischungsverhältnis von 60 : 40 bis 40 : 60 vorliegen.

18. Verwendung einer Farbstoffmischung von Anspruch 1 zum Färben von hydroxy- und/oder carbonamidgruppenhaltigem Material, insbesondere Fasermaterial.

19. Verfahren zum Färben von hydroxy- und/oder carbonamidgruppenhaltigem Material, insbesondere Fasermaterial, bei welchem man einen oder mehrere Farbstoffeauf das Material aufbringt und diese auf dem Material mittels Wärme oder mit Hilfe eines alkalisch wirkenden Mittels oder mittels beider Maßnahmen fixiert, **dadurch gekennzeichnet, daß** man als Farbstoffe eine Farbstoffmischung von Anspruch 1 oder eine oder mehrere in Anspruch 1 definierten Farbstoffe (1) und einen oder mehrere der in Anspruch 1 definierten Farbstoffe (2) einzeln zusammen einsetzt.

## Claims

1. A dye mixture comprising one or more dyes of the hereinbelow indicated and defined general formula (1a) or of the hereinbelow indicated and defined general formula (1b) or of the general formulae (1a) and (1b) and one or more dyes of the hereinbelow indicated and defined general formula (2a) or (2b) or (2c) or of a combination of the dyes of the formulae (2a) to (2c) in a molar ratio of the dyes (1a) or (1b) or (1a) and (1b) to the dyes (2a) or (2b) or (2c) or a combination of these dyes (2a) to (2c) of 70 : 30 to 30 : 70 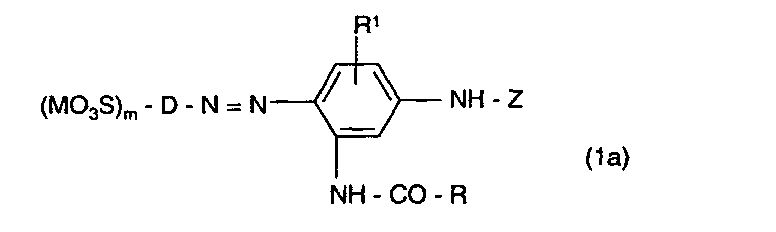 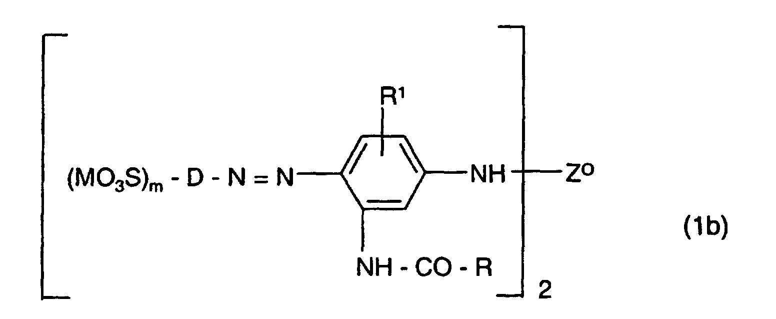 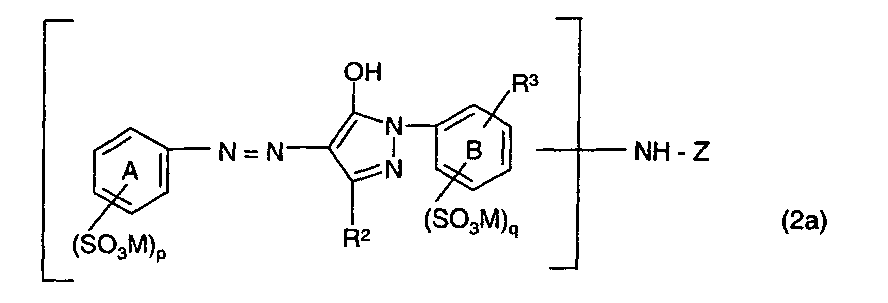 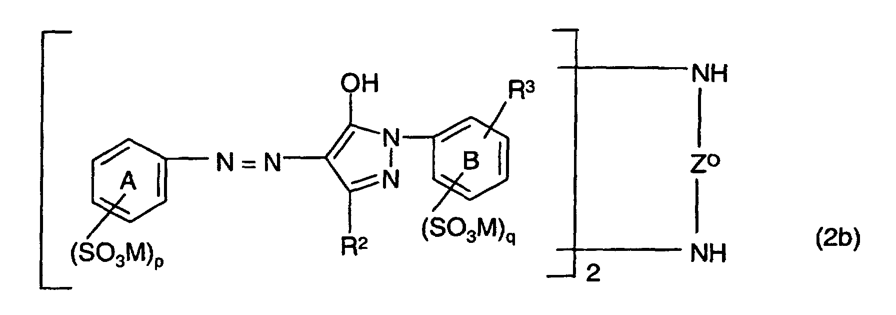 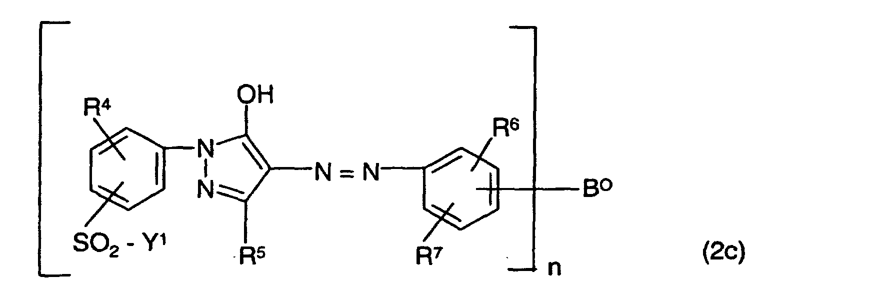 where
M is hydrogen or an alkali metal;
D is the radical of benzene or of naphthalene;
Y¹ is vinyl or is ethyl which is substituted in the β-position by an alkali-eliminable substituent;
R is amino or alkyl of 1 to 4 carbon atoms or is alkyl of 1 to 4 carbon atoms which is substituted by carboxyl, sulfo, phosphato, hydroxyl or a -SO-Y² group where Y² is Y¹;
R¹ is hydrogen, alkyl of 1 to 4 carbon atoms, alkoxy of 1 to 4 carbon atoms or sulfo;
m is 1, 2 or 3;
Z is a fiber-reactive radical selected from the group of the halopyrimidines or of the halotriazines which are optionally substituted by an ether or amino grouping, where the radical of the halotriazine can also be bonded to a group of the general formula -SO₂-Y³, where Y³ is Y¹, and this group is attached via a bridge member to an amino group attached to the triazine radical;
Z^{O} is a bivalent radical of the general formula (3) 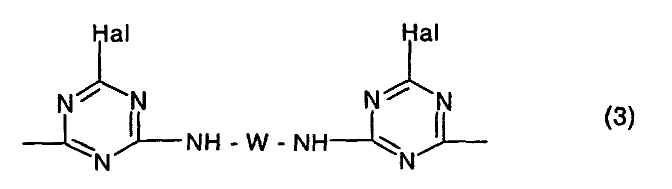 where
Hal is chlorine or fluorine, and
W is phenylene, alkylene, phenylene-alkylene-phenylene, phenylene-alkenylene-phenylene or phenylene-phenylene or a radical of the general formula phen-G-phen, where the phenylene radicals may be substituted by 1 or 2 substituents selected from the group consisting of methoxy, ethoxy, methyl, ethyl, sulfo and carboxyl, the alkylene radicals contain 1 to 6 carbon atoms, and may be substituted by sulfo or carboxyl and/or interrupted by 1 or 2 hetero groups, and the alkenylene radicals are those of 2 to 4 carbon atoms, and where phen is equal to phenylene of the above definition and G is -O-, -NH-, -CO- or -NH-CO-NH-:
R² is methyl or carboxyl;
R³ is hydrogen, halogen, alkyl of 1 to 4 carbon atoms or alkoxy of 1 to 4 carbon atoms;
p is zero, 1 or 2 and
q is zero, 1 or 2,
where the sum of (p+q) is 1, 2 or 3 and the -SO₃M group is hydrogen when p is zero or q is zero;
in the formula (2a) the -NH-Z group is attached to the benzene nucleus A or to the benzene nucleus B;
in the formula (2b) one amino group of the bridge member -NH-Z^{O}-NH- is attached to the benzene nucleus A of one monoazo radical and the other amino group is attached to the benzene nucleus B of the other monoazo radical or both the NH groups are attached to both As or to both Bs;
R⁴ is hydrogen, sulfo, alkyl of 1 to 4 carbon atoms or alkoxy of 1 to 4 carbon atoms;
R⁵ is methyl or carboxyl;
R⁶ is hydrogen, sulfo, carboxyl, alkyl of 1 to 4 carbon atoms or alkoxy of 1 to 4 carbon atoms;
R⁷ is hydrogen, sulfo, alkyl of 1 to 4 carbon atoms or alkoxy of 1 to 4 carbon atoms;
n is 1 or 2;
B^{O} is hydrogen when n is 1 or a direct covalent bond, alkylene, alkenylene or alkylene-phenylene-alkylene when n is 2, in which case the phenylene radicals may be substituted by 1 or 2 substituents selected from the group consisting of methoxy, ethoxy, methyl, ethyl, sulfo and carboxyl, the alkylene radicals contain 1 to 6 carbon atoms and may be substituted by sulfo or carboxyl and/or interrupted by 1 or 2 hetero groups and the alkenylene radicals are those of 2 to 4 carbon atoms, or is a group of the hereinabove defined formula element Z^{O}.

2. A dye mixture as claimed in claim 1, wherein Z is a radical of the general formula (4b) 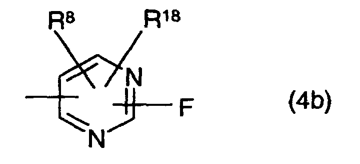 where R⁸ is hydrogen, chlorine or fluorine and R¹⁸ is hydrogen or fluorine.

3. A dye mixture as claimed in claim 1, wherein Z is a radical of the general formula (4c) or (4d) 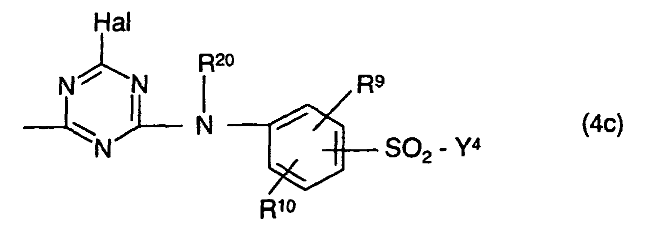 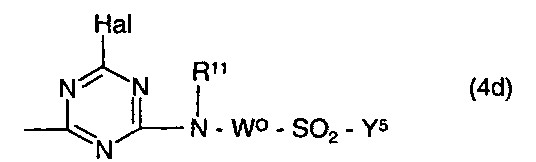 where Hal is chlorine or fluorine, R⁹ is hydrogen, alkyl of 1 to 4 carbon atoms or alkoxy of 1 to 4 carbon atoms, R¹⁰ is hydrogen, alkyl of 1 to 4 carbon atoms or alkoxy of 1 to 4 carbon atoms, R²⁰ is hydrogen or alkyl of 1 to 4 carbon atoms, R¹¹ is hydrogen, alkyl of 1 to 4 carbon atoms, phenyl or chlorine-, sulfo-, methyl- or carboxyl- substituted phenyl, Y⁴ is vinyl or is ethyl which is substituted in the β-position by an alkali-eliminable substituent, Y⁵ is Y⁴ and W^{O} is alkylene of 1 to 4 carbon atoms or alkylene of 3 to 6 carbon atoms which is interrupted by 1 or 2 hetero groups selected from the group consisting of -O- and -NH- or is a radical of the formula alk-phen or phen-alk or phen where alk is methylene, n-ethylene or n-propylene and phen is phenylene which may be substituted by 1 or 2 substituents selected from the group consisting of sulfo, alkyl of 1 to 4 carbon atoms and alkoxy of 1 to 4 carbon atoms.

4. A dye mixture as claimed in any of claims 1 to 3, wherein R¹ is disposed para to the -NH-CO-R group.

5. A dye mixture as claimed in at least one of claims 3 and 4, wherein R⁹ and R¹⁰ are both hydrogen.

6. A dye mixture as claimed in at least one of claims 3 and 4, wherein R¹¹ is hydrogen, methyl, ethyl or phenyl and W^{O} is n-ethylene, n-propylene or alkylene of 3 to 6 carbon atoms which is interrupted by 1 or 2 hetero groups selected from the group consisting of -O- and -NH-.

7. A dye mixture as claimed in at least one of claims 1 to 6, wherein Z^{O} is a radical of the general formula (3) 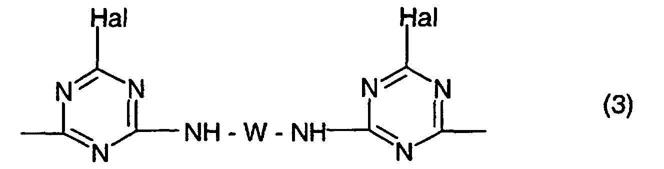 where Hal is chlorine or fluorine, W is phenylene, alkylene, phenylene-alkylene-phenylene, phenylene-alkenylene-phenylene or phenylene-phenylene or a radical of the general formula phen-G-phen, where the phenylene radicals may be substituted by 1 or 2 substituents selected from the group consisting of methoxy, ethoxy, methyl, ethyl, sulfo and carboxyl, the alkylene radicals contain 1 to 6 carbon atoms and may be substituted by sulfo or carboxyl and/or interrupted by 1 or 2 hetero groups and the alkenylene radicals are those of 2 to 4 carbon atoms and where phen is equal to phenylene of the above definition and G is an -O- , -NH- , -CO- or -NH-CO-NH- group.

8. A dye mixture as claimed in at least one of claims 1 to 7, wherein n is 1 and B^{O} is hydrogen.

9. A dye mixture as claimed in at least one of claims 1 to 7, wherein n is 2 and B^{O} is a direct bond, alkylene, alkenylene or alkylene-phenylene-alkylene, where the phenylene radicals may be substituted by 1 or 2 substituents selected from the group consisting of methoxy, ethoxy, methyl, ethyl, sulfo and carboxyl, the alkylene radicals contain 1 to 6 carbon atoms and may be substituted by sulfo or carboxyl and/or interrupted by 1 or 2 hetero groups and the alkenylene radicals are those of 2 to 4 carbon atoms.

10. A dye mixture as claimed in at least one of claims 1 to 7, wherein n is 2 and B^{O} is a group of the general formula (3) 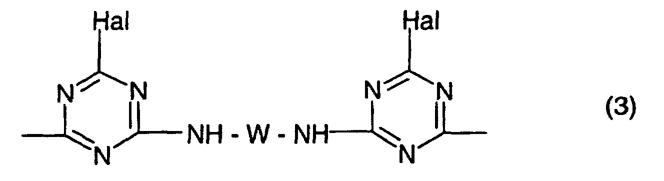 where Hal is chlorine or fluorine, W is phenylene, alkylene, phenylene-alkylene-phenylene, phenylene-alkenylene-phenylene or phenylene-phenylene or a radical of the general formula phen-G-phen, where the phenylene radicals may be substituted by 1 or 2 substituents selected from the group consisting of methoxy, ethoxy, methyl, ethyl, sulfo and carboxyl, the alkylene radicals contain 1 to 6 carbon atoms and may be substituted by sulfo or carboxyl and/or interrupted by 1 or 2 hetero groups and the alkenylene radicals are those of 2 to 4 carbon atoms and where phen is equal to phenylene of the above definition and G is an -O-, -NH-, -CO- or -NH-CO-NH- group.

11. A dye mixture as claimed in claim 1, wherein the dye of the general formula (2a) is a dye of the general formula (5a) 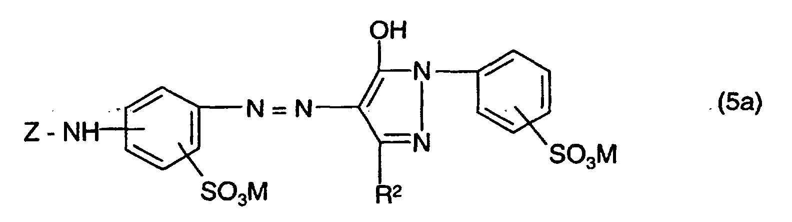 where M, R² and Z are each as defined in claim 1.

12. A dye mixture as claimed in claim 1, wherein the dye of the general formula (2c) is a dye of the general formula (5c) 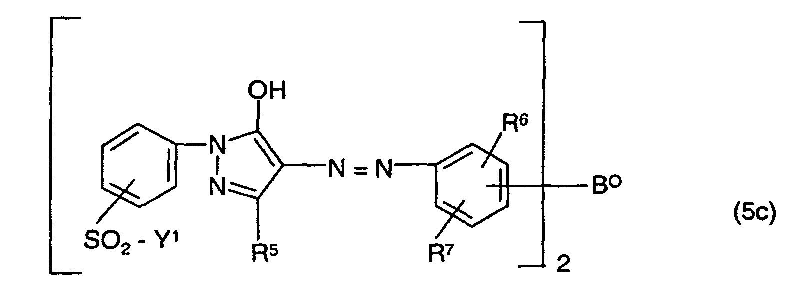 where Y¹ and R⁵ are each as defined in claim 1, R⁶ is hydrogen, methyl or sulfo, R⁷ is hydrogen or sulfo and B^{O} is a direct bond or methylene, n-ethylene or vinylidene.

13. A dye mixture as claimed in claim 1, wherein the dye of the general formula (2c) is a dye of the general formula (5b) 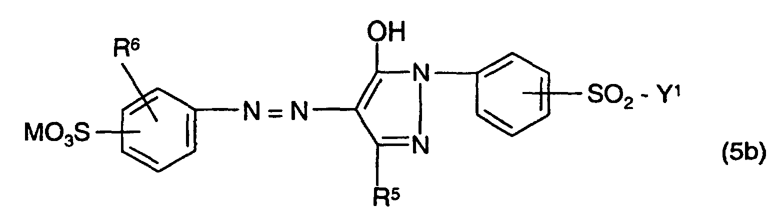 where M, R⁵, R⁶ and Y¹ are each as defined in claim 1.

14. A dye mixture as claimed in at least one of claims 1 to 13, wherein Y¹ is vinyl, β-chloroethyl or β-sulfatoethyl.

15. A dye mixture as claimed in at least one of claims 1 to 13, wherein Y² is vinyl, β-chloroethyl or β-sulfatoethyl.

16. A dye mixture as claimed in at least one of claims 1 to 13, wherein Y³ is vinyl, β-chloroethyl or β-sulfatoethyl.

17. A dye mixture as claimed in at least one of claims 1 to 16, wherein the dye or dyes (1) and the dye or dyes (2) are present in a molar mixing ratio of 60 : 40 to 40 : 60.

18. The use of a dye mixture of claim 1 for dyeing hydroxyl- and/or carboxamido-containing material, especially fiber material.

19. A process for dyeing hydroxyl- and/or carboxamido-containing material, especially fiber material, by applying one or more dyes to the material and fixing them on the material by means of heat or with the aid of an alkaline agent or by means of both measures, which comprises using as dyes a dye mixture of claim 1 or one or more dyes (1) defined in claim 1 and one or more dyes (2) defined in claim 1 individually together.

## Revendications

1. Mélange de colorants comprenant un ou plusieurs colorants de formule générale (1a) indiquée et définie ci-dessous ou de formule générale (1b) indiquée ou définie ci-dessous, ou de formules générales (1a) et (1b), et un ou plusieurs colorants de formule générale (2a) ou (2b) ou (2c) indiquée et définie ci-dessus, ou une combinaison des colorants de formules (2a) à (2c), en un rapport molaire entre les colorants (1a) ou (1b) ou (1a) et (1b) et les colorants (2a) ou (2b) ou (2c) ou une combinaison de ces colorants (2a) à (2c) de 70:30 à 30:70 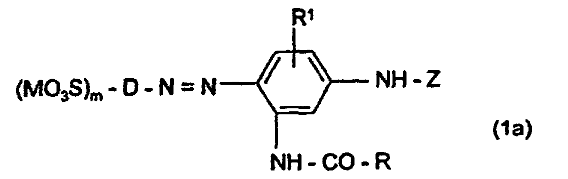 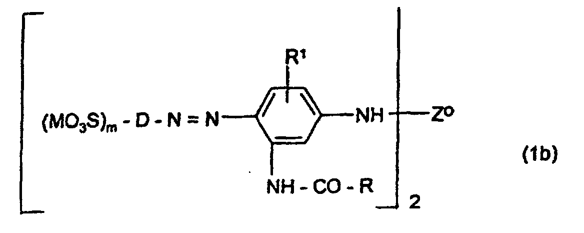 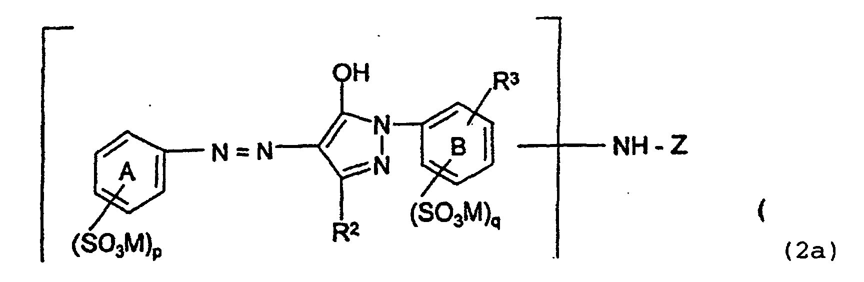 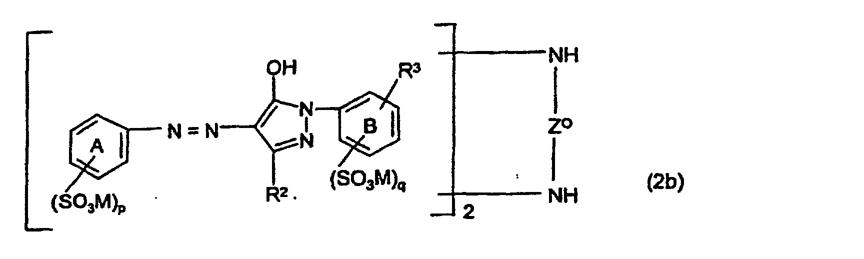 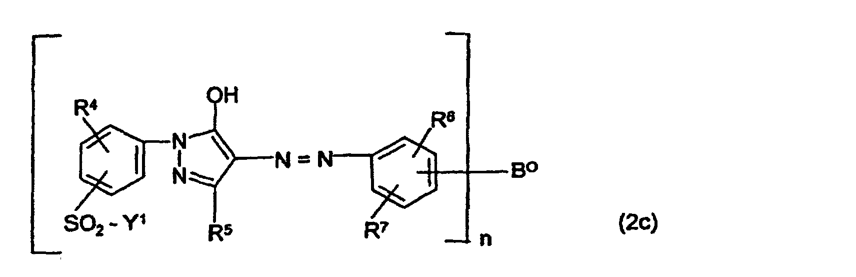 dans lesquelles :
M représente un hydrogène ou un métal alcalin ;
D représente le radical du benzène ou du naphtalène ;
Y¹ représente un vinyle ou un éthyle, qui est substitué en position β par un substituant pouvant être éliminé en milieu alcalin ;
R représente un amino ou un alkyle ayant de 1 à 4 atomes de carbone ou un alkyle ayant de 1 à 4 atomes de carbone substitué par un carboxy, un sulfo, un phosphato, un hydroxy ou un groupe -SO-Y² dans lequel Y² présente une signification indiquée pour Y¹ ;
R¹ représente un hydrogène, un alkyle ayant de 1 à 4 atomes de carbone, un alcoxy ayant de 1 à 4 atomes de carbone ou un sulfo ;
m représente le nombre 1, 2 ou 3 ;
Z représente un radical réactif sur la fibre parmi la série des halogénopyrimidines ou des halogénotriazines éventuellement substituées par un groupement éther ou amino, le radical de l'halogénotriazine pouvant également être lié à un groupe de formule -SO₂-Y³ dans lequel Y³ présente une signification de Y¹, lequel est lié à un groupe amino lié au radical triazine, par l'intermédiaire d'un élément de pontage ;
Z^{o} représente un radical bivalent de formule générale (3) 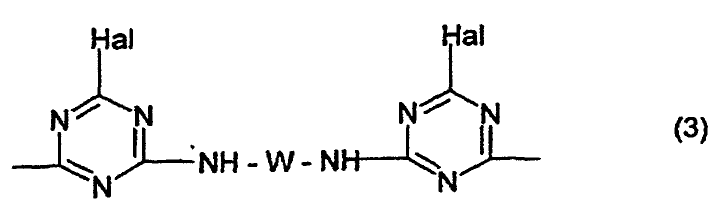
dans laquelle
Hal représente un chlore ou un fluor, et
W représente un phénylène, un alkylène, un phénylène-alkylène-phénylène, un phénylène-alcénylène-phénylène ou un phénylène-phénylène, ou un radical de formule générale phen-G-phen, les radicaux phénylène pouvant être substitués par 1 ou 2 substituants parmi le groupe constitué d'un méthoxy, d'un éthoxy, d'un méthyle, d'un éthyle, d'un sulfo et d'un carboxy, les radicaux alkylène étant constitués de 1 à 6 atomes de carbone et pouvant être substitués par un sulfo ou un carboxy et/ou interrompus par 1 ou 2 groupes hétéro, et les radicaux alcénylène étant ceux ayant de 2 à 4 atomes de carbone, et phen représentant un phénylène de signification ci-dessus et G représentant un groupe -O-, -NH-, -CO- ou -NH-CO-NH- ;
R² représente un méthyle ou un carboxy ;
R³ représente un hydrogène, un halogène, un alkyle ayant de 1 à 4 atomes de carbone ou un alcoxy ayant de 1 à 4 atomes de carbone ;
p représente le nombre zéro, 1 ou 2 et
q représente le nombre zéro, 1 ou 2,
la somme de (p + q) représentant le nombre 1, 2 ou 3 et le groupe -SO₃M représentant un hydrogène dans le cas où p vaut zéro ou q vaut zéro ; dans la formule (2a), le groupe -NH-Z est lié au noyau benzénique A ou au noyau benzénique B ; dans la formule (2b), un groupe amino de l'élément de pontage -NHZ^{o}-NH- est lié au noyau benzénique A d'un radical monoazo et l'autre groupe amino est lié au noyau benzénique B de l'autre radical monoazo, ou les deux groupes NH sont liés aux deux A ou aux deux B ;
R⁴ représente un hydrogène, un sulfo, un alkyle ayant de 1 à 4 atomes de carbone ou un alcoxy ayant de 1 à 4 atomes de carbone ;
R⁵ représente un méthyle ou un carboxy ;
R⁶ représente un hydrogène, un sulfo, un carboxy, un alkyle ayant de 1 à 4 atomes de carbone ou un alcoxy ayant de 1 à 4 atomes de carbone ;
R⁷ représente un hydrogène, un sulfo, un alkyle ayant de 1 à 4 atomes de carbone ou un alcoxy ayant de 1 à 4 atomes de carbone ;
n représente le nombre 1 ou 2 ;
B⁰ représente un hydrogène, au cas où n vaut 1, et représente, au cas où n vaut 2, une liaison covalente directe, un alkylène, un alcénylène ou un alkylène-phénylène-alkylène, les radicaux phénylène pouvant être substitués par 1 ou 2 substituants parmi le groupe constitué d'un méthoxy, d'un éthoxy, d'un méthyle, d'un éthyle, d'un sulfo et d'un carboxy, les radicaux alkylène étant constitués de 1 à 6 atomes de carbone et pouvant être substitués par un sulfo ou un carboxy et/ou interrompus par 1 ou 2 groupes hétéro, et les radicaux alcénylène représentant ceux ayant de 2 à 4 atomes de carbone, ou représente un groupe du radical de formule Z^{o} défini ci-dessus.

2. Mélange de colorants selon la revendication 1, **caractérisé en ce que** Z représente un radical de formule générale (4b) 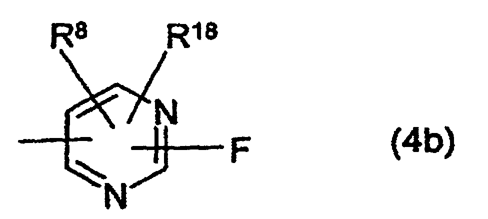 dans laquelle R⁸ représente un hydrogène, un chlore ou un fluor et R¹⁸ représente un hydrogène ou un fluor.

3. Mélange de colorants selon la revendication 1, **caractérisé en ce que** Z représente un radical de formules générales (4c) ou (4d) 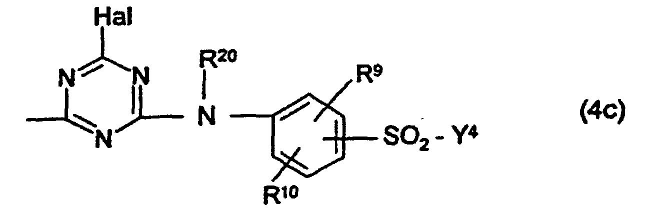 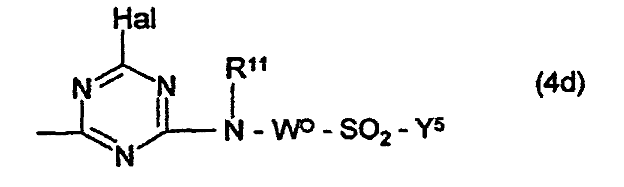 dans lesquelles Hal représente un chlore ou un fluor, R⁹ représente un hydrogène, un alkyle ayant de 1 à 4 atomes de carbone ou un alcoxy ayant de 1 à 4 atomes de carbone, R¹⁰ représente un hydrogène, un alkyle ayant de 1 à 4 atomes de carbone ou un alcoxy ayant de 1 à 4 atomes de carbone, R²⁰ représente un hydrogène ou un alkyle ayant de 1 à 4 atomes de carbone, R¹¹ représente un hydrogène, un alkyle ayant de 1 à 4 atomes de carbone, un phényle ou un phényle substitué par un chlore, un sulfo, un méthyle ou un carboxy, Y⁴ représente un vinyle ou un éthyle, qui est substitué en position β par un substituant pouvant être éliminé en milieu alcalin, Y⁵ présente l'une des significations mentionnées pour Y⁴ et W⁰ représente un alkylène ayant de 1 à 4 atomes de carbone ou un alkylène ayant de 3 à 6 atomes de carbone, qui est interrompu par 1 ou 2 groupes hétéro parmi le groupe de formules -O- et -NH-, ou un radical de formules alk-phen ou phen-alk ou phen, dans lesquelles alk représente un méthylène, un n-éthylène ou un n-propylène et phen représente un phénylène, qui peut être substitué par 1 à 2 substituants parmi le groupe constitué d'un sulfo, d'un alkyle ayant de 1 à 4 atomes de carbone et d'un alcoxy ayant de 1 à 4 atomes de carbone.

4. Mélange de colorants selon au moins l'une des revendications 1 à 3, **caractérisé en ce que** R¹ se trouve en position para par rapport au groupe -NH-CO-R.

5. Mélange de colorants selon au moins l'une des revendications 3 et 4, **caractérisé en ce que** R⁹ et R¹⁰ représentent tous les deux un hydrogène.

6. Mélange de colorants selon au moins l'une des revendications 3 et 4, **caractérisé en ce que** R¹¹ représente un hydrogène, un méthyle, un éthyle ou un phényle et W⁰ représente un n-éthylène, un n-propylène ou un alkylène ayant de 3 à 6 atomes de carbone, qui est interrompu par 1 ou 2 groupes hétéro parmi le groupe de formules -O- et -NH-.

7. Mélange de colorants selon au moins l'une des revendications 1 à 6, **caractérisé en ce que** Z^{o} représente un radical de formule générale (3) 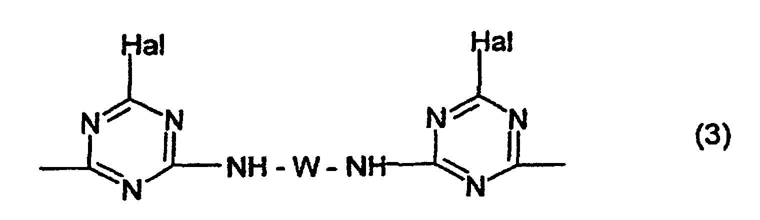 dans laquelle Hal représente un chlore ou un fluor, W représente un phénylène, un alkylène, un phénylène-alkylène-phénylène, un phénylène-alcénylène-phénylène ou un phénylène-phénylène, ou un radical de formule générale phen-G-phen, les radicaux phénylène pouvant être substitués par 1 ou 2 substituants choisis parmi le groupe constitué d'un méthoxy, d'un éthoxy, d'un méthyle, d'un éthyle, d'un sulfo et d'un carboxy, les radicaux alkylène étant constitués de 1 à 6 atomes de carbone et pouvant être substitués par un sulfo ou un carboxy et/ou interrompus par 1 ou 2 groupes hétéro, et les radicaux alcénylène représentant ceux ayant de 2 à 4 atomes de carbone, et phen représentant un phénylène de signification ci-dessus et G représentant un groupe -O-, -NH-, -CO- ou -NH-CO-NH-.

8. Mélange de colorants selon au moins l'une des revendications 1 à 7, **caractérisé en ce que** n représente le nombre 1 et B⁰ représente un hydrogène.

9. Mélange de colorants selon au moins l'une des revendications 1 à 7, **caractérisé en ce que** n représente le nombre 2 et B⁰ représente une liaison directe, un alkylène, un alcénylène ou un alkylène-phénylène-alkylène, les radicaux phénylène pouvant être substitués par 1 ou 2 substituants parmi le groupe constitué d'un méthoxy, d'un éthoxy, d'un méthyle, d'un éthyle, d'un sulfo et d'un carboxy, les radicaux alkylène étant constitués de 1 à 6 atomes de carbone et pouvant être substitués par un sulfo ou un carboxy et/ou interrompus par 1 ou 2 groupes hétéro, et les radicaux alcénylène représentant ceux ayant de 2 à 4 atomes de carbone.

10. Mélange de colorants selon au moins l'une des revendications 1 à 7, **caractérisé en ce que** n représente le nombre 2 et B⁰ représente un groupe de formule générale (3) 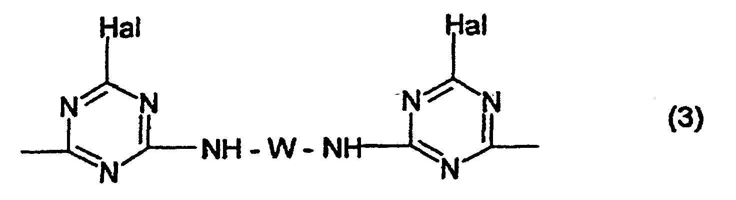 dans laquelle Hal représente un chlore ou un fluor, W représente un phénylène, un alkylène, un phénylène-alkylène-phénylène, un phénylène-alcénylène-phénylène ou un phénylène-phénylène, ou un radical de formule générale phen-G-phen, les radicaux phénylène pouvant être substitués par 1 ou 2 substituants choisis parmi le groupe constitué d'un méthoxy, d'un éthoxy, d'un méthyle, d'un éthyle, d'un sulfo et d'un carboxy, les radicaux alkylène étant constitués de 1 à 6 atomes de carbone et pouvant être substitués par un sulfo ou un carboxy et/ou interrompus par 1 ou 2 groupes hétéro, et les radicaux alcénylène représentant ceux ayant de 2 à 4 atomes de carbone, et phen représentant un phénylène de signification ci-dessus et G représentant un groupe -O-, -NH-, -CO- ou -NH-CO-NH-.

11. Mélange de colorants selon la revendication 1, **caractérisé en ce que** le colorant de formule générale (2a) est un colorant de formule générale (5a) 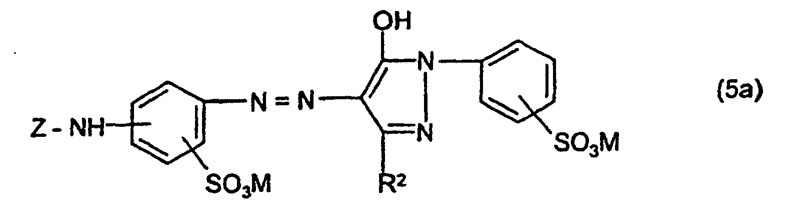 dans laquelle M, R² et Z présentent les significations mentionnées dans la revendication 1.

12. Mélange de colorants selon la revendication 1, **caractérisé en ce que** le colorant de formule générale (2c) représente un colorant de formule générale (5c) 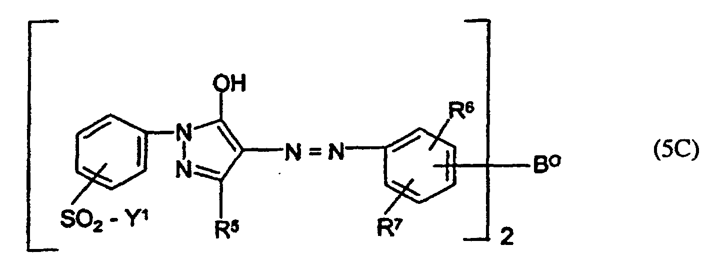 dans laquelle Y¹ et R⁵ présentent les significations mentionnées dans la revendication 1, R⁶ représente un hydrogène, un méthyle ou un sulfo, R⁷ représente un hydrogène ou un sulfo et B⁰ représente une liaison directe ou un méthylène, un n-éthylène ou un vinylidène.

13. Mélange de colorants selon la revendication 1, **caractérisé en ce que** le colorant de formule générale (2c) est un colorant de formule générale (5b) 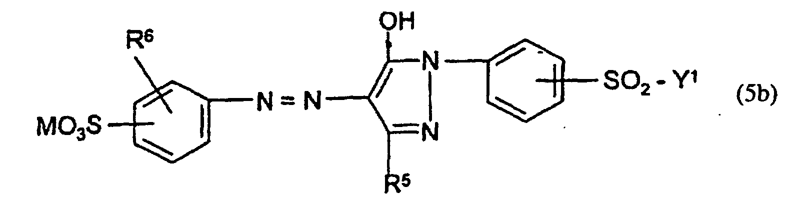 dans laquelle M, R⁵, R⁶ et Y¹ présentent les significations mentionnées dans la revendication 1.

14. Mélange de colorants selon au moins l'une des revendications 1 à 13, **caractérisé en ce que** Y¹ représente un vinyle, un β-chloroéthyle ou un β-sulfatoéthyle.

15. Mélange de colorants selon au moins l'une des revendications 1 à 13, **caractérisé en ce que** Y² représente un vinyle, un β-chloroéthyle ou un β-sulfatoéthyle.

16. Mélange de colorants selon au moins l'une des revendications 1 à 13, **caractérisé en ce que** Y³ représente un vinyle, un β-chloroéthyle ou un β-sulfatoéthyle.

17. Mélange de colorants selon au moins l'une des revendications 1 à 16, **caractérisé en ce que** le ou les colorants (1) et le ou les colorants (2) sont présents en un rapport de mélange molaire de 60:40 à 40:60.

18. Utilisation d'un mélange de colorants selon la revendication 1 pour la teinture d'une matière renfermant des groupes hydroxy et/ou carboxamido, en particulier d'une matière fibreuse.

19. Procédé de teinture d'une matière renfermant des groupes hydroxy et/ou carboxamido, en particulier d'une matière fibreuse, dans lequel un ou plusieurs colorants sont appliqués sur la matière et ceux-ci sont fixés sur la matière par la chaleur ou à l'aide d'un agent alcalin ou au moyen des deux mesures, **caractérisé en ce que** l'on utilise, en tant que colorants, un mélange de colorants selon la revendication 1 ou un ou plusieurs colorants (1) définis dans la revendication 1 et un ou plusieurs colorants (2) définis dans la revendication 1, individuellement conjointement.
